# EUROPÄISCHE PATENTSCHRIFT

(11) **EP 2 066 430 B1**
(45) Veröffentlichungstag und Bekanntmachung des Hinweises auf die Patenterteilung: **04.04.2012**
(21) Anmeldenummer: 07803519.3
(22) Anmeldetag: 17.09.2007
(51) Int. Cl.: B01F 5/02, B01F 5/10, F04F 5/10, B01F 13/02, F04F 5/46, B01J 19/24, B01J 19/26

(54) **Verfahren zum Durchmischen einer in einem abgeschlossenen Behälter befindlichen Flüssigkeit bzw. einer Mischung aus einer Flüssigkeit und einem feinteiligen Feststoff**
Method for mixing, in a sealed container, a liquid or a mixture of a liquid and a fine-particle solid, respectively
Procédé pour mélanger, dans un contenant fermé, un liquide ou bien un mélange d'un liquide et de particules fines solides

(30) Priorität: 21.09.2006 DE 102006045088; 21.09.2006 US 846095 P
(43) Veröffentlichungstag der Anmeldung: 10.06.2009
(73) Patentinhaber: BASF SE, 67056 Ludwigshafen (DE)
(72) Erfinder: BLECHSCHMITT, Michael, 67105 Schifferstadt (DE); HAMMON, Ulrich, 68163 Mannheim (DE); MARTIN, Friedrich-Georg, 69124 Heidelberg (DE); MÜLLER-ENGEL, Klaus Joachim, 76297 Stutensee (DE); ZEHNER, Peter, 67273 Weisenheim Am Berg (DE)
(86) Internationale Anmeldenummer: PCT/EP2007/059756
(87) Internationale Veröffentlichungsnummer: WO 2008/034783

(56) Entgegenhaltungen:
- EP-A- 0 218 253
- EP-A- 0 419 419
- EP-A- 0 856 491
- DE-A1- 2 410 570
- JP-A- 62 225 242
- US-A- 4 014 961
- US-A- 5 431 861
- US-A- 5 811 595

## Beschreibung

Vorliegende Erfindung betrifft ein Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl einer im Behälter in der Flüssigkeit oder in der Mischung befindlichen Saugvorrichtung.

Die Lagerung von Flüssigkeiten oder von Mischungen aus einer Flüssigkeit und einem feinteiligen Feststoff in im wesentlichen abgeschlossenen Behältern ist allgemein bekannt (z. B. zum Zweck der Bevorratung). Üblicherweise werden solche Behälter auch als Tank bezeichnet. Normalerweise sind die Behälter nicht völlig abgeschlossen, sondern weisen in der Regel z. B. wenigstens eine Entnahmestelle auf, über die z. B. mittels einer Pumpe bei Bedarf vom im Behälter gelagerten Inhalt entnommen werden kann. In entsprechender Weise weist der Behälter üblicherweise auch wenigstens eine Zufuhrstelle auf, über die dem Behälter der zu lagernde Inhalt zugeführt werden kann. Absperrorgane (z. B. Ventile- oder Kugelhähne) ermöglichen dabei normalerweise das Ein- und Auslassen der Flüssigkeit bzw. der Mischung und gewährleisten gleichzeitig die Dichtheit in Ruhestellung. In ähnlicher Weise können in den Behälter Instrumente zur Messung von Temperatur, Füllstand und Druck im Tank (Behälter) eingeführt sein.

Normalerweise füllt die im Tank zu lagernde Flüssigkeit oder Mischung aus einer Flüssigkeit und einem feinteiligen Feststoff das im Tank von einer fluiden (gasförmig oder flüssig) Phase einnehmbare Innenvolumen nicht vollständig aus. Vielmehr wird aus den unterschiedlichsten Gründen eine Teilmenge dieses Innenvolumens von einer Gasphase eingenommen. Erfolgt die Lagerung der Flüssigkeit oder Mischung bei Atmosphärendruck, kann der im wesentlichen abgeschlossene Behälter auf der Gasphasenseite grundsätzlich (z. B. über ein über eine Fackel (oder ein sonstiges Abgasreinigungssystem (z. B. eine Gaswäsche) führendes Abgassystem) zur Atmosphäre hin geöffnet sein. Der Öffnungsquerschnitt ist dabei normalerweise so bemessen, dass er einerseits möglichst gering und andererseits so beschaffen ist, dass der Gasausgleich beim Befüllen und Entleeren des Behälters ohne nennenswerten Druckverlust erfolgt. In typischer Weise sind die mittleren Durchmesser solcher Öffnungsquerschnitte ≤ 25 cm (bei Füllvolumina von typisch ≥ 100 m³, häufig bis 10 000 m³). Alternativ sind üblicherweise Einrichtungen zur Druckentlastung bei unzulässigem Überdruck oder Unterdruck, die bis zum Ansprechdruck (der sowohl bei oder oberhalb als auch unterhalb von Atmosphärendruck liegen kann) dicht abschließen, ebenfalls in die relevanten Lagerbehälter eingebaut (z. B. Rückschlagklappen). Häufig wird in den Lagertank zur kontinuierlichen Bestimmung des Füllstandes auf vorgegebenen Höhen in der Gas-und in der Flüssigphase eine geringe Menge (bezogen auf das Volumen der Gasphase im Behälter in der Regel < 1 Vol.-%/h) eines Messgases zudosiert. Aus der Differenz des diesbezüglich jeweils erforderlichen Zudosierungsdrucks ergibt sich bei bekanntem Füllinhalt unmittelbar der Füllstand.

Vielfach ist es nun erforderlich, dass der über die Zeit durch Entnahme und/oder Zugabe variable Füllinhalt eines solchen Lagertanks von Zeit zu Zeit oder stetig durchmischt wird, um seine Homogenität zu erhöhen bzw. zu gewährleisten. Dies kann ursächlich aus den unterschiedlichsten Gründen erfolgen. Ist der Füllinhalt des Behälters eine Mischung aus einer Flüssigkeit und einem feinteiligen Feststoff (z. B. eine Aufschlämmung), besteht häufig das Risiko, dass sich der feinteilige Feststoff während der Lagerung im Tank unter der Einwirkung der Schwerkraft absetzt und der Tankinhalt sich so im Lauf der Zeit entmischt. Bei einer Entnahme aus dem Lagertank würde dann gegebenenfalls z. B. nicht mehr das gewünschte Gemisch, sondern nur noch die in diesem enthaltene Flüssigkeit entnommen. Beispiele für vorgenannten Fall sind unter anderen wässrige Polymerisatsuspensionen. Je nach spezifischem Gewicht der flüssigen Phase kann der in dieser in disperser Verteilung enthaltene feinteilige Feststoff aber auch aufrahmen und sich in der Phasengrenze flüssig/gasförmig anreichern. Ein möglicher Beispielfall dafür bilden Polymerisatdispersionen (auch wässrige Polymerisatdispersionen).

Wird im Tank (Behälter) nur eine Flüssigkeit gelagert, kann diese ebenfalls mehrphasig sein (z. B. eine Emulsion, beispielhaft angeführt seien Öl-in-Wasser-Emulsionen sowie Wasser-in-Öl-Emulsionen) und bei längerem Lagern ohne Zwischenhomogenisierung entmischen, was normalerweise unerwünscht ist.

Aber auch eine chemisch homogene Flüssigkeit kann beim Lagern unerwünschte physikalische Inhomogenitäten ausbilden. Diese können beispielsweise aus einer inhomogenen Temperaturverteilung (z. B. durch einseitige Sonnenbestrahlung des Tanks bedingt) bestehen. Konsequenz einer solchen kann z. B. eine unerwünschte Kristallbildung oder eine nicht angestrebte Zersetzung der gelagerten Flüssigkeit sein. Häufig wird zum Zweck der Einhaltung einer gewünschten Lagertemperatur auch kontinuierlich eine Teilmenge der gelagerten Flüssigkeit entnommen, über einen vorzugsweise indirekten Wärmeaustauscher geführt und anschließend in den Lagertank rückgeführt. In diesem Fall strebt der Lagerhalter üblicherweise einen möglichst raschen Temperaturausgleich zwischen noch im Lagerbehälter befindlicher Flüssigkeit und in selbigen über den Wärmeaustauscher rückgeführter Flüssigkeit durch geeignete rasche Durchmischung an.

Zur sicheren Lagerung von radikalisch polymerisierbaren Verbindungen (oder diese enthaltende Lösungen) wie z. B. Acrolein, Methacrolein, Acrylsäure, Methacrylsäure und/oder deren Ester (insbesondere die C₁- bis C₈-Alkylester) ist nicht nur eine sorgfältige Temperaturkontrolle des flüssigen Tankinhalts erforderlich. Vielmehr müssen den vorgenannten, in der Regel wenigstens einfach ethylenisch ungesättigten, organischen Verbindungen (Monomeren) sogenannte Inhibitoren (Radikalfänger) zugesetzt werden, um das Eintreten einer zufällig initiierten, unerwünschten radikalischen Polymerisation zu verhindern bzw. zu unterbinden. Vielfach entfalten solche Inhibitoren ihre volle Wirkung nur im Beisein von molekularem Sauerstoff (der seinerseits selbst Inhibitor sein kann). Aus diesem Grund werden solche Monomeren normalerweise unter einer molekularen Sauerstoff enthaltenden Gasatmosphäre gelagert (vgl. z. B. WO 2005/049543 und US-A 6,910,511) und es ist dafür Sorge zu tragen, dass das flüssige Monomere (bzw. dessen Lösung) an dem darin gelösten molekularen Sauerstoff nicht verarmt. Letzteres kann z. B. dann eintreten, wenn das Monomere temporär lokal auskristallisiert und nachfolgend wieder in Lösung geht. Der dabei resultierenden lokalen Verarmung an molekularem Sauerstoff kann gleichfalls durch entsprechendes Durchmischen entgegenwirkt werden.

Sollte trotz der vorbeschriebenen Vorsichtsmaßnahmen eine unerwünschte radikalische Polymerisation des Tankinhalts ausgelöst werden, kann einer solchen dadurch entgegengetreten werden, dass man dem Tankinhalt in möglichst kurzer Zeit ein Mittel zur Sofortbeendigung der radikalischen Polymerisation zusetzt und dieses über den Tankinhalt möglichst rasch verteilt (vgl. z. B. WO 00/64947, WO 99/21893, WO 99/24161, WO 99/59717). Auch in diesem Fall ist eine möglichst gleichmäßige und rasch ausführbare Durchmischung des Tankinhalts nach erfolgter Mittelzugabe erforderlich.

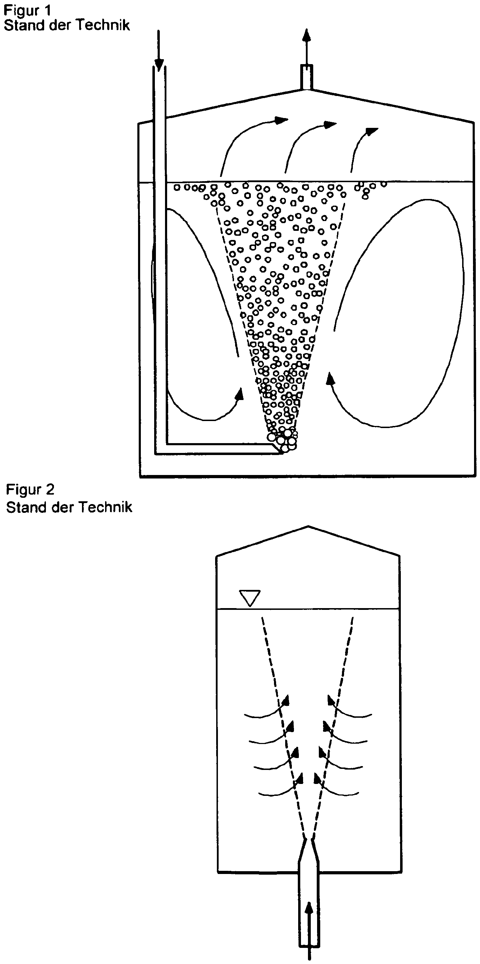

Grundsätzlich kann der flüssige Inhalt eines Tanks dadurch durchmischt werden (vgl. Figur 1), dass man z. B. in Bodennähe ein geeignetes Gas in den Tank einperlt oder eindüst (z. B. durch einen "Duschkopf"). Die im flüssigen Tankinhalt aufsteigenden Gasblasen bewerkstelligen die erwünschte Durchmischung in dem sie Flüssigkeit mitreißen. Der gesamte (im Grundsatz nimmt die Mischwirkung sogar von unten nach oben zu) flüssige Behälterinhalt wird dadurch unabhängig von der Höhe des Flüssigkeitsstandes von einer großräumigen Strömung erfasst und gut vermischt. Nachteilig an einer solchen Verfahrensweise ist jedoch der (im großtechnischen Maßstab werden zum Vermischen des Tankinhalts vergleichsweise große Gasvolumenströme benötigt) während des Durchmischens stetige Bedarf an einem geeigneten Mischgas. Dieses muss im übrigen wieder stetig aus dem Tank herausgeführt werden. Beim Durchperlen durch den zu durchmischenden flüssigen Tankinhalt sättigt es sich darüber hinaus normalerweise mit der im Tank befindlichen Flüssigkeit und kann aufgrund dieser Beladung (z. B. im Fall einer gelagerten organischen Flüssigkeit) häufig nicht in einfacher Weise in die Umwelt entlassen werden. Vielmehr ist in den meisten Fällen deshalb eine vergleichsweise aufwendige (teure) Abgasbehandlung (z. B. Verbrennung (das beim Befüllen des Tanks in notwendiger Weise entweichende Gas wird in diesen Fällen in zweckmäßiger Weise in einer Fackel verbrannt) oder Waschung) erforderlich. Prinzipiell kann das aus dem Tank herausgeführte Mischgas zum Durchperlen des flüssigen Inhalts desselben auch wieder in diesen rückgeführt werden. In nachteiliger Weise bedarf es dazu jedoch in notwendiger Weise eines separaten Kreisgaskompressors, der das Abgas auf den Druck am Behälterboden rückverdichtet. Derartige Kompressoren sind nicht nur teuer, sondern verursachen auch einen hohen Wartungsaufwand sowie einen nicht unerheblichen Energiebedarf.

Alternativ kann der Tankinhalt mittels eines Rührers durchmischt werden. Dazu bedarf es jedoch einer separaten Antriebsquelle sowie einer durch die Behälterwand geführten Antriebswelle. Die Abdichtung von durch eine Behälterwand geführten rotierenden Elementen erweist sich jedoch generell als besonders schwierig. Im übrigen ist bei großen Füllvolumina eines Tanks (großtechnische Füllvolumina betragen für Lagertanks in typischer Weise 100 m³ bis 10 000 m³, häufig 200 bis 1 000 m³ oder 300 bis 800 m³, charakteristisch 500 m³) die Fertigung eines Rührers bereits vergleichsweise kostspielig.

Vor diesem Hintergrund hat es sich als zweckmäßig erwiesen, zur Durchmischung des flüssigen Tankinhalts demselben mit der zur Tankentnahme verfügbaren Pumpe eine Teilmenge der im Tank (Behälter) gelagerten Flüssigkeit oder Mischung aus einer Flüssigkeit und einem feinteiligen Feststoff zu entnehmen und wenigstens einen Teil der entnommenen Teilmenge über eine in Bodennähe des Tanks befindliche und nach oben gerichtete Treibdüse (in einfachster Weise ein Strömungskanal mit in Strömungsrichtung sich verjüngendem Querschnitt, in dem die Druckenergie einer hindurch strömenden Flüssigkeit verlustarm in zusätzliche Bewegungsenergie umgewandelt und der Flüssigkeitsstrom dadurch beschleunigt wird) als (Treibflüssigkeit) flüssigen Strahl (Treibstrahl) in den Tank zurückzuführen.

Hierbei saugt der nach oben gerichtete flüssige Strahl nach den Gesetzen des Freistrahls längs seines Weges durch die im Tank befindliche Flüssigkeit von selbiger an und die flüssigen Medien vermischen sich. Alternativ oder zusätzlich kann zum Zweck der Durchmischung auch das Auffüllen (Nachbefüllen, aber auch Erstbefüllen) des Behälters mit der Flüssigkeit oder Mischung so erfolgen, dass die Flüssigkeit oder Mischung über eine vorgenannte Treibdüse zugeführt wird.

Nachteilig an dieser Art und Weise der Durchmischung ist jedoch, dass die Mischwirkung des Freistrahls nur einen vergleichsweise beschränkten Raum um ihn herum erfasst, so dass die erzielte Mischwirkung normalerweise nicht voll zu befriedigen vermag (Figur 2).

Ein weiterer Nachteil besteht darin, dass der flüssige Strahl (insbesondere bei sinkendem Füllstand im Tank) aufgrund seiner vergleichsweise hohen mittleren Impulsdichte (bzw. Geschwindigkeit) vergleichsweise leicht aus der im Tank befindlichen flüssigen Phase austritt (den Trennspiegel zwischen flüssiger und gasförmiger Phase durchbricht) und mit diesem Austritt gegebenenfalls eine intensive Tröpfchenbildung (Spraybildung) innerhalb der Gasphase einhergeht. Dies ist insbesondere dann von Nachteil, wenn der Tankinhalt eine organische Flüssigkeit (z. B. Acrolein, Methacrolein, Acrylsäure, Methacrylsäure, die Ester dieser Säuren oder andere organische Monomere) umfasst, deren Gasphase im Beisein von molekularem Sauerstoff explosiv sein kann (vgl. z. B. DE-A 10 2004 034 515). Zum einen erhöhen die feinverteilten Tröpfchen in der Gasphase deren Gehalt an organischem Material, wodurch aus einer zuvor gegebenenfalls nicht zündfähigen Gasphase eine zündfähige wird und die gebildeten Tröpfchen erfahren auf ihrem Flug durch die Gasphase reibungsbedingt regelmäßig eine elektrische Aufladung ihrer Oberfläche. In der Folge daraus erwachsende Funkenentladung vermag die Zündung auszulösen. Handelt es sich bei den Tröpfchen um solche einer wässrigen Polymerisatdispersion, können diese aber auch z. B. auf ihrem Weg durch die Gasphase in unerwünschter Weise irreversible verfilmen und bei späteren Verwendungen der Polymerisatdispersion stören.

Handelt es sich beim Tankinhalt um die Aufschlämmung eines feinteiligen Feststoffs in einer Flüssigkeit, vermag der mit dem durch den Trennspiegel durchbrechende Strahl auf die Behälterinnenwand geschleuderte Feststoff gegebenenfalls auf selbiger anzuhaften, wodurch er der im Behälter gelagerten Schlämme entzogen wird.

Aber auch bei einer sonstigen Flüssigkeit ist eine sich wie vorstehend beschrieben einstellende Spraybildung u. a. insofern von Nachteil, als die kleinen Spraytröpfchen einen erhöhten Dampfdruck aufweisen. Es kommt dadurch zu unerwünschter Verdampfungskühlung, die die Temperaturkonstanz des Tankinhalts beeinträchtigt.

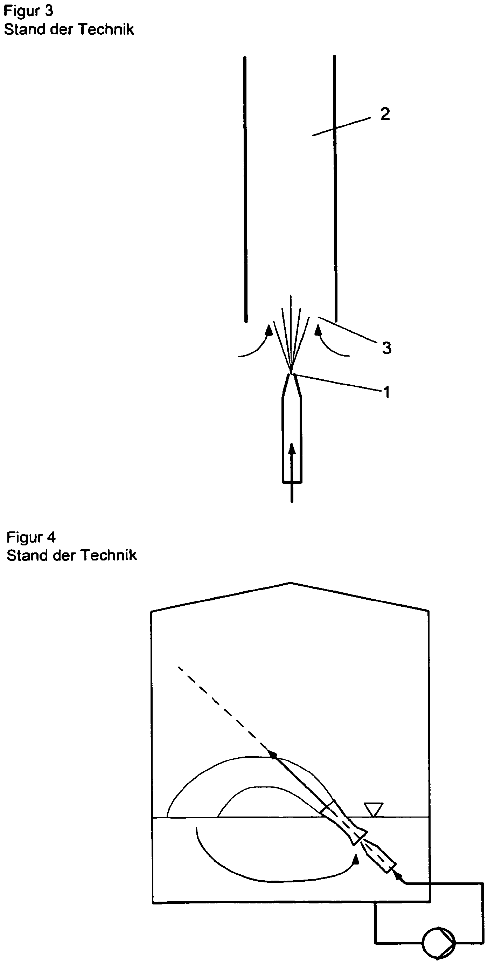

Um die Vermischung zu intensivieren (vgl. Chemie-Ing. Techn. 42. Jahrg. 1970, S. 474 bis 479) wurde im Stand der Technik gemäß der Figur 3 dieser Anmeldung hinter der Treibdüse (1) ein (am Ein- und Austritt offener) Mischraum (2) angeordnet (die numerischen Adressen beziehen sich stets auf die Figuren dieser Anmeldung). Dadurch wird die im Tankraum befindliche Flüssigkeit nicht wie beim Freistrahl längs des Strahlweges angesaugt, sondern die nach dem Impulssatz geförderte Menge muss durch den Eintrittsquerschnitt (3) des Mischraums (im weiteren vereinfacht auch als Impulsaustauschraum oder als Impulsaustauschrohr bezeichnet; der Querschnitt muss aber nicht in notwendiger Weise kreisrund sein; die rohrförmige Ausführungsform ist jedoch anwendungstechnisch zweckmäßig) eintreten. Diese Anordnung von Treibdüse und Mischraum (der z. B. als kurzes Rohr mit größerem Querschnitt der Treibdüse nachgeschaltet ist) soll im weiteren als Strahldüse bezeichnet werden. Bei ihr tritt der Treibstrahl mit vergleichsweise hoher Geschwindigkeit in einen im Vergleich zum Tankvolumen verhältnismäßig kleinen Impulsaustauschraum (häufig beträgt das Volumen des Impulsaustauschraums nur ca. 0,0001 % bis 1 % des Tankinnenvolumens) und saugt dabei eine Wälzmenge der im Tank befindlichen Flüssigkeit an. Hersteller von solchermaßen geeigneten Strahldüsen ist z. B. die GEA Wiegand GmbH in D-76275 Ettlingen.

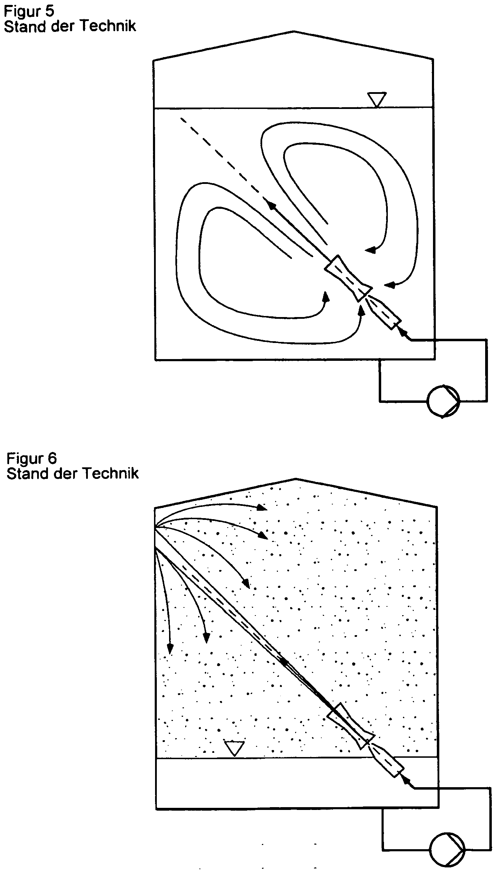

Das aus dem Impulsaustauschrohr ausströmende Gemisch weist einen im Vergleich zum Treibstrahl bereits deutlich abgeschwächten Impuls seiner Elemente (eine verminderte mittlere Impulsdichte) auf, was die vorbeschriebene Austrittswahrscheinlichkeit mit Tröpfchenbildung (Spraybildung) mindert (sie wird erst bei vergleichsweise niedrigerem Stand des Trennspiegels und mit abgeschwächter mittlerer Austrittsimpulsdichte eintreten; vgl. Figur 4). Gemeinsam mit dem von unten wirkenden Ansaugen bildet das nach oben gerichtete Ausströmen aus dem Impulsaustauschrohr großräumige zirkulare Strömungsfelder mit geschlossenen Feldlinien gemäß Figur 5, die bei schräg nach oben gerichteter und im Tank vorzugsweise leicht erhöht angebrachter Strahldüse (vgl. z. B. Acrylate Esters, A Summary Of Safety And Handling, 3rd Edition, 2002, compiled by Atofina, BASF, Celanese, Dow und Rohm & Haas) eine im Vergleich zur Treibdüse verbesserte (insbesondere vollständigere) Durchmischung bedingen, die jedoch noch nicht voll zu befriedigen vermag. Sinkt der Füllstand (der Trennspiegel) darüber hinaus unter das Ansaugniveau, tritt der Treibstrahl auch hier ungehindert durch das Impulsaustauchrohr und verspritzt (versprüht) zu feinteiligen Tröpfchen mit den bereits beschriebenen Risiken (Figur 6). In der Regel muss die Treibstrahlflüssigkeit vor ihrem Eintritt in die Strahldüse daher in der Regel durch Ventile fließen, die sich bei Unterschreitung eines vorgegebenen Füllstandes im Tank verschließen und ihre Durchströmung unterbinden. Auch nimmt die Mischwirkung in der Regel von unten nach oben ab.

Die EP-A 856491 betrifft eine Vorrichtung zur Erzeugung von ozoniertem Wasser durch Lösen von Ozon in Wasser.

Angesichts dieses Standes der Technik bestand die Aufgabe darin, ein verbessertes Verfahren zum Durchmischen einer flüssigen Tankbefüllung zur Verfügung zu stellen, das auf einige der vorstehend beschriebenen Problemfälle anwendbar ist und nicht zuletzt auch ein rascheres Durchmischen ermöglicht.

Demgemäß wird ein Verfahren zum Durchmischen einer in einem im wesentlichen abgeschlossenen Behälter mit der Maßgabe befindlichen (gelagerten) Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl einer im Behälter in der Flüssigkeit oder in der Mischung befindlichen Saugvorrichtung, die mit Hilfe des Treibstrahls aus der im Behälter befindlichen Gasphase Gas ansaugt und das angesaugte Gas gemeinsam mit dem Treibstrahl in die im Behälter befindliche Flüssigkeit oder Mischung entlässt zur Verfügung gestellt, das dadurch gekennzeichnet ist, dass die Gasphase molekularen Sauerstoff und die Flüssigphase wenigstens eine der organischen Verbindungen aus der Gruppe bestehend aus N-Vinylformamid, Acrolein, Methacrolein, Acrylsäure, Methacrylsäure, Ester der Acrylsäure und Ester der Methacrylsäure enthält sowie in der Flüssigkeit wenigstens ein Polymerisationsinhibitor gelöst ist, und je Minute pro Liter an im Behälter befindlicher Flüssigkeit oder Mischung aus Flüssigkeit und feinteiligem Feststoff wenigstens 10⁻⁵ Normliter Gas aus der Gasphase angesaugt und in die im Behälter befindliche Flüssigkeit oder Mischung mit der Maßgabe entlassen werden, dass von dem gemeinsam mit dem Treibstrahl in die im Behälter befindliche Flüssigkeit oder Mischung entlassenen aus der Gasphase angesaugten Gas ≤ 1 Vol.-% beim einmaligen Durchperlen durch die gelagerte Flüssigkeit oder Mischung chemisch verändert werden.

Erfindungsgemäß zweckmäßig ist das erfindungsgemäße Verfahren in einfacher Weise so durchführbar, dass es das Entnehmen einer Teilmenge der Flüssigkeit oder der Mischung aus dem Behälter und das Rückführen wenigstens eines Teils der entnommenen Teilmenge als Bestandteil des Treibstrahls der Saugvorrichtung umfasst. Grundsätzlich kann der Treibstrahl der Saugvorrichtung beim erfindungsgemäßen Verfahren auch ausschließlich wenigstens ein Teil (oder die Gesamtmenge) einer zuvor aus dem Behälter entnommenen Teilmenge der im Behälter befindlichen Flüssigkeit oder Mischung sein.

Bei Bedarf kann ein gegebenenfalls nicht als Treibstrahl rückgeführter Teil der entnommenen Teilmenge anderen Verwendungszwecken zugeführt werden.

Selbstverständlich kann das erfindungsgemäße Verfahren aber auch ausgeführt werden, ohne dass die in den Behälter als Treibstrahl zugeführte Flüssigkeit oder Mischung zuvor aus dem Behälter entnommene Flüssigkeit oder Mischung umfasst. Dies ist z. B. dadurch möglich, dass man die zum Nachfüllen in den Behälter zu führende Flüssigkeit oder Mischung als Treibstrahl der Saugvorrichtung dem Behälter zuführt. Selbstverständlich kann sich der Treibstrahl der Saugvorrichtung beim erfindungsgemäßen Verfahren aber auch aus einem Gemisch aus zum Zweck der Nachfüllung in den Behälter zu führender Flüssigkeit oder Mischung und dem Behälter zuvor entnommener Flüssigkeit oder Mischung konstituieren.

Die Gasphase erfährt beim erfindungsgemäßen Verfahren im wesentliche keine chemische Umsetzung. D. h., die Gasphase verbraucht sich beim erfindungsgemäßen Verfahren im wesentlichen nicht. Erfindungsgemäß werden von dem gemeinsam mit dem Treibstrahl in die im Behälter befindliche Flüssigkeit oder Mischung entlassenen aus der Gasphase angesaugten Gas ≤ 1 Vol.-%, vorzugsweise ≤ 0,75 Vol.-%, besonders bevorzugt ≤ 0,5 Vol.-%, oder ≤ 0,25 Vol.-% und ganz besonders bevorzugt ≤ 0,1 Vol.-% beim einmaligen (einfachen) Durchperlen (Aufsteigen) durch die gelagerte Flüssigkeit oder Mischung chemisch verändert.

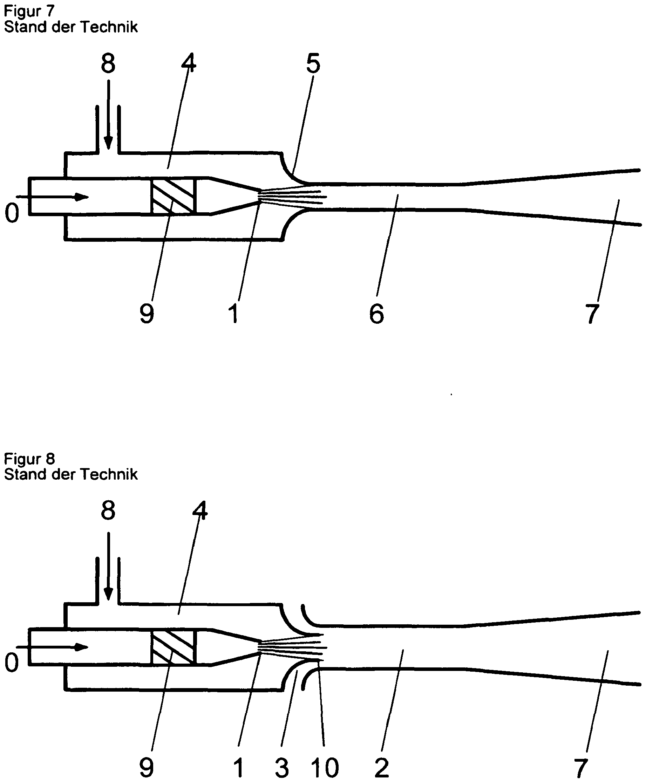

In einfachster Form ist das erfindungsgemäße Verfahren mit Hilfe eines Ejektors (d.h., nach dem Prinzip der Wasserstrahlpumpe) als Saugvorrichtung zu verwirklichen. Der Treibstrahl wird dabei durch eine Treibdüse gepumpt, die so in den Ejektor eingepasst ist, dass bei der Düsen-Passage z. B. über ein in die Gasphase des Behälters ragendes Steigrohr (es wird in der Regel durch an der Behälterwand befestigte Halterungen gehalten) aus der Gasphase Gas angesaugt und gemeinsam mit dem Treibstrahl in Form von zerteilten Gasbläschen in den flüssigen Inhalt des Lagerbehälters entlassen wird. Den prinzipiellen Aufbau und die Bezeichnungen eines Ejektors (in der Literatur und im Folgenden auch als Strahlverdichter bezeichnet) zeigt die Figur 7 (vgl. auch Chem.-Ing. Techn. 47. Jahrg. 1975/Nr. 5, Seite 209; Chemie-Ing.-Techn. MS201/75; vt >>wverfahrenstechnik<< 15 (1981) Nr. 10, S. 738 bis 749; "Untersuchungen an Wasserstrahl-Luftpumpen mit einem einzigen kreiszylindrischen Treibstrahl", D.I. G.v. Pawel-Rammingen, Dissertation 1936, TH Braunschweig; sowie "Mixing shocks and their influence on the design of liquid-gas ejectors", J.H. Witte, Proefschrift, Technische Hogeschool, Delft (Dezember 1962)).

Ein Ejektor (vgl. z. B. Figur 7) besteht (bzw. umfasst) in der Regel aus der Treibdüse (1), dem (die Treibdüse normalerweise umgebenden) Ansaugraum (4), dem Einlauf zum Mischraum (in der Regel ein Mischrohr) (5), dem Mischrohr (Mischraum) (6) und dem Diffusor (7). Der aus der Treibdüse austretende schnelle Strahl an Treibflüssigkeit (die an der Stelle (0) in den Ejektor hineingepumpt wird) erzeugt im Ansaugraum einen Unterdruck. Dadurch wird das Gas aus dem Ansaugraum (dessen Eingang (8) z. B. über eine gasdurchlässige Verbindung (z. B. ein entsprechendes Steigrohr) mit der Gasphase im Behälter (oberhalb des Trennspiegels) verbunden ist) angesaugt (gefördert) und infolge des Impulsaustausches zwischen Treibflüssigkeit und Gas im Mischrohr (Mischraum) sowie Diffusor verdichtet, in der Treibflüssigkeit dispergiert und gemeinsam mit dieser in die Tankflüssigkeit entlassen. Beim Aufsteigen in selbiger reißen Gasblasen die Flüssigkeit mit und es kommt zur gewünschten (nach oben sogar zunehmend wirksameren) Vermischung in der gelagerten Flüssigkeit oder in dem gelagerten Gemisch. Das durch den Trennspiegel in die Gasphase rückgekehrte Gas kann wieder angesaugt werden etc..

Treibdüsen, deren Düsenmündung Flüssigkeitsstrahlen mit erhöhter Turbulenz erzeugen, sind in den erfindungsgemäß geeigneten Ejektoren besonders vorteilhaft, da mit erhöhter Turbulenz austretende Treibstrahlen das Gas aus dem Ansaugraum besonders effektiv mitreißen (die Kontaktfläche zwischen Gas- und Flüssigphase ist erhöht), was eine erhöhte Saugwirkung bedingt und die pro Zeiteinheit angesaugte Gasmenge erhöht, was die angestrebte Durchmischung verbessert. Eine zusätzliche Verbesserung der Aufweitung des Treibstrahls hinter seinem Ausgang aus der Treibdüse wird erreicht, wenn ihm vor seinem Durchgang durch die Treibdüse eine leichte Drallbewegung aufgeprägt wird. Dies ist z. B. dadurch möglich, dass man kurz vor der Treibdüse geeignete Drallkörper (9) einbaut. Als solche kommen erfindungsgemäß vorteilhaft z. B. Schaufelkränze in Betracht, wie sie Bild 3 in vt >>verfahrenstechnik<< 15 (1981) Nr. 10 auf Seite 739 zeigt. Bei Verwendung von Drallkörpern, die einen zu starken Drall auf den Flüssigkeitsstrahl übertragen (d.h., zu stark verdrallte turbulente Treibstrahlen), kann jedoch auch eine Verschlechterung des Saugverhaltens eintreten. Prinzipiell kann die Verdrallung auch durch eine tangentialle Treibflüssigkeitszuführung in die Treibdüse erzeugt werden.

Alternativ und/oder zusätzlich zur Verdrallung des Treibstrahls kann dieser z. B. dadurch zerteilt (in mehrere Einzelstrahlen aufgeteilt) werden, dass der Austrittsquerschnitt des Treibstrahls eine Vielzahl von Austrittsöffnungen aufweist (der Querschnitt der Treibdüse mit einem Treibstrahlaufteiler versehen ist). In einfachster Weise ist dies dadurch realisierbar, dass in den Austrittsquerschnitt der Treibdüse ein Sieb(blech) eingebaut wird, das eine Vielzahl von Durchtrittsöffnungen (im einfachsten Fall ringförmige) aufweist, wie es z.B. Fig. 2 der zitierten Proefschrift von J.H. Witte auf Seite 14 zeigt.

Anstelle von Löchern (man spricht dann von Sieb- oder Viellochdüsen) kommen aber z. B. auch Spaltdüsen (z. B. konzentrische Ringspalte) in Betracht.

Dadurch, dass bei der erfindungsgemäßen Verwendung des Ejektors die Mischwirkung nicht zuletzt durch das in die gelagerte Flüssigkeit bzw. in die gelagerte Mischung aus Flüssigkeit und feinteiligem Feststoff eingedüste Gas erfolgt, muss der Ejektor im Lagerbehälter nicht wie die Strahldüse schräg nach oben und auch nicht leicht erhöht angebracht werden. Vielmehr kann der Ejektor in unmittelbarer Bodennähe des Lagertanks angebracht sein. Darüber hinaus kann die Treibdüse (im Ejektor (und damit der Ejektor als solcher) im wesentlichen ohne Verlust der Durchmischungseffizienz auch parallel zum Boden des Lagertanks (d.h., im Normalfall waagrecht) eingebaut werden. Durch den waagrechten Einbau kann der Trennspiegel (der Flüssigkeitsspiegel) im Lagerbehälter wesentlich tiefer abgesenkt werden, bevor keine ausreichende Überdeckung mit Flüssigkeit mehr vorhanden ist. Bei weiterer Absenkung des Flüssigkeitsspiegels bis unterhalb des Diffusors des waagrecht eingebauten Ejektors ist der waagrecht aus dem Ejektor austretende Strahl insbesondere im Fall seiner vorherigen Verdrallung und/oder Zerteilung aufgeweitet und erzeugt beim Auftreten auf die Behälterwand eine im Vergleich zur Strahldüse verminderte Spraymenge. Die Auslegung (die z.B. von den Stoffdaten des Tankinhalts und von der Tankgeometrie abhängt) eines zum Durchmischen des flüssigen Inhalts eines Lagertanks eingesetzten Ejektors kann gemäß den in den zitierten Schriften gemachten Angaben erfolgen. Als Fertigungsmaterial kommen angepasst an die Beschaffenheit der gelagerten Flüssigkeit/Mischung sowohl Edelstähle als auch Kunststoffe (z. B. faserverstärkte Kunststoffmatrizen, wie sie die EP-A 245844 empfiehlt) in Betracht. Handelt es sich beim Lagerinhalt um Acrolein, Methacrolein, Acrylsäure, Methacrylsäure, deren Ester oder um Lösungen derselben, empfiehlt sich als Ejektorwerkstoff insbesondere Edelstahl der DIN-Werkstoffnummern 1.4541 und 1.4547. Grundsätzlich ist die erfindungsgemäße Verwendung eines Ejektors für das erfindungsgemäße Verfahren ausreichend. Erfindungsgemäß zweckmäßig wird dieser im Behälter so platziert, dass sich der Austritt aus dem Diffusor in der Behältermitte befindet. Selbstverständlich können in ein- und demselben Behälter aber auch mehrere Ejektoren gleichzeitig erfindungsgemäß betrieben werden. Anwendungstechnisch zweckmäßig wird man dabei Ejektoren gleicher Größe verwenden. Die Ejektoren können dabei prinzipiell in beliebiger Stellung zueinander im Tank angeordnet sein und beispielsweise zusammen eine Stern- oder Kugelsternform bilden. Erfindungsgemäß günstig ist es, dass die den Treibstrahl liefernde Pumpe mit der zur Entnahme der im Behälter gelagerten Flüssigkeit/Mischung zu verwendenden Pumpe identisch sein kann (es können für die beiden Zwecke aber auch zwei Pumpen eingesetzt werden). Im Fall von (Meth)acrylmonomeren enthaltenden gelagerten Flüssigkeiten (oder sonstigen flüssig gelagerten Chemikalien) kommen als derartige Förderpumpen beispielsweise die in der WO 2004/003389 empfohlenen Förderpumpen mit doppelter Gleitringdichtung in Betracht.

Als zu diesen alternative Förderpumpen kommen beispielsweise jene der US-A 5,727,792, der US-A 4,168,936, der EP-A 1 092 874 sowie der US-A 4,865,333 in Betracht.

Die für das erfindungsgemäße Verfahren mittels einer Ejektors pro Zeiteinheit aus der Gasphase angesaugte Gasmenge (und mit dieser die Durchmischwirkung) kann erfindungsgemäß zweckmäßig dadurch gesteigert werden (in typischer Weise um einen Faktor 2 bis 3), dass man die Vorteilhaftigkeit des Ejektors für das erfindungsgemäße Verfahren mit den vorteilhaften Gesichtspunkten der Eingangs dieser Schrift gewürdigten (und z. B. auch in der DE-A 24 04 289 beschriebenen) Strahldüse in geeigneter Weise zur sogenannten Ejektorstrahldüse als einer erfindungsgemäß alternativ zum Ejektor zu verwendenden Saugvorrichtung kombiniert, die in der Figur 8 schematisch abgebildet ist (das Prinzip der Ejektorstrahldüse findet sich beispielsweise beschrieben in Chemie-Ing.-Techn. 47. Jahrgang 1975/Nr. 5, Seite 209, in Chemie-Ing.-Techn. MS201/75, in Chemie-Ing.-Techn. 61 (1989) Nr. 11, S. 908 bis 909, und in der DE-A 24 10 570, DE-A 15 57 018, sowie in der EP 0218253.

Physikalisch ist dies dadurch begründet, dass das Gas im Ejektor nur mit der Flüssigkeit des Treibstrahls in Berührung kommt, während in den Impulsaustauschraum der Strahldüse zusätzlich ein Vielfaches der Treibstrahlmenge aus der Umgebungsflüssigkeit eingesaugt wird. Vereinfacht ausgedrückt ist eine Ejektorstrahldüse nun nichts anderes als eine Strahldüse, bei der als Treibstrahl das sich hinter der Treibdüse eines Ejektors bildende Gemisch aus angesaugtem Gas und durch die Treibdüse des Ejektors gepumpter Treibflüssigkeit verwendet wird.

Zu diesem Zweck geht der Ansaugraum des Ejektorteils der Ejektorstrahldüse nicht wie beim alleinigen Ejektor nahtlos in ein Mischrohr (einen Mischraum) über. Vielmehr wird hier der Ansaugraum zu einer Mischdüse (10) ausgeführt (läuft der Ansaugraum zu einer Mischdüse aus), aus der das aus dem "Ejektor" kommende Gemisch aus Treibflüssigkeit und angesaugtem Gas wie der Treibstrahl bei einer Strahldüse in ein Impulsaustauschrohr (allgemein einen (am Ein- und Austritt offenen) Impulsaustauschraum) gedüst wird. Dieser hat bei der Ejektorstrahldüse in der Regel zunächst einen konstanten Querschnitt und läuft in Strömungsrichtung nachfolgend üblicherweise (aber nicht in notwendiger Weise) zu einem Diffusor (der Diffusor weist einen sich in Strömungsrichtung vergrößernden Querschnitt auf) aus. Die dadurch aus der Umgebung des Übergangs Mischdüse/Impulsaustauschrohr im Lagertank pro Zeiteinheit angesaugte Flüssigkeitsmenge ist ein Vielfaches (in der Regel das 1- bzw. 2- bis 10fache, häufig das 4- bis 8fache) der in den Ejektorteil pro Zeiteinheit gepumpten Treibflüssigkeit.

Die das angesaugte Gas in einer Ejektorstrahldüse somit insgesamt in Strömungsrichtung mitreißende Flüssigkeitsmenge (immer je Zeiteinheit bezogen) ist dadurch wesentlich größer als bei einem reinen Ejektor. Dies bedingt eine deutlich höhere Saugkraft und im erfindungsgemäßen Sinn eine dadurch erzielbare erhöhte Durchmischungswirkung. Vereinfacht ausgedrückt fördern im Mischrohr eines Ejektors zerteilte Flüssigkeitströpfchen eine kontinuierliche Gasphase, während im Impulsaustauschrohr der Ejektorstrahldüse ein Flüssigkeitsstrom in diesem zerteilte Gasbläschen fördert.

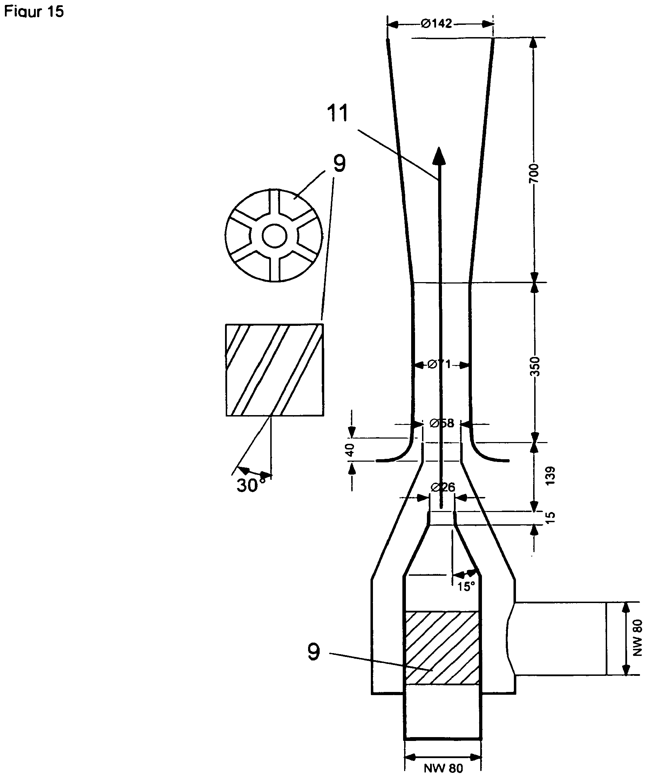

Erfindungsgemäß vorteilhaft enthält auch die Treibstrahldüse im Ejektorteil der Ejektorstrahldüse Elemente, die den aus der Treibstrahldüse austretenden Treibstrahl aufweiten und/oder zerteilen. Wie bereits bei der Beschreibung des Strahlverdichters ausgeführt, kommen als solche Elemente z. B. Drallkörper und/oder Loch- bzw. Spaltsiebe (Treibstrahlaufteiler) in Betracht. Ein weiterer Vorteil der Ejektorstrahldüse im Vergleich zum reinen Strahlverdichter ist eine sich einstellende feinere Gaszerteilung, was sich auf die angestrebte Durchmischung gleichfalls vorteilhaft auswirkt. Zusammenfassend wird in einer Ejektorstrahldüse das im Ejektorteil angesaugte Gas gemeinsam mit dem ansaugenden Treibstrahl in eine Mischdüse geführt und in selbiger miteinander vermischt. Das so erzeugte Treibflüssigkeit-Gasgemisch wird in einen sich im gelagerten flüssigen Medium befindlichen und sich in Eintrittsrichtung des Treibflüssigkeit-Gasgemischs erstreckenden, im Vergleich zum Behältervolumen sehr kleinen (in der Regel beträgt das Volumen des Impulsaustauschraumes den hundertsten bis hunderttausendsten bzw. millionsten Teil des maximalen flüssigen Füllinhalts des Behälters), Impulsaustauschraum (am engsten Querschnitt desselben) gemeinsam eingeführt (eingedüst). Hierbei wird beim Eintritt des aus der Mischdüse ausströmenden Treibflüssigkeit-Gasgemischs (der in Abwesenheit des gelagerten flüssigen Mediums durch den Schwerpunkt der engsten Querschnittsfläche der Mischdüse austretende (ausströmende) (und in den Impulsaustauschraum führende) Strahl soll in dieser Schrift als von der Mischdüse in den Imputsaustauschraum führender zentraler Strahl (siehe (11) in Fig. 15) bezeichnet werden) in den Impulsaustauschraum von dem gelagerten flüssigen Medium aus der Umgebung angesaugt. Dieser angesaugte "zweite" Flüssigkeitsstrom wird wegen des vergleichsweise engen Querschnitts des (Eintritts in den Impulsaustauschraum) Impulsaustauschrohrs stark beschleunigt. Hierdurch findet eine statische Druckabsenkung bis auf den Ansaugdruck des Gases im Ejektorteil statt. Gleichzeitig werden innerhalb von Bruchteilen einer Sekunde nach dem Eintritt in den Impulsaustauschraum die angesaugte Flüssigkeit und das Treibflüssigkeit-Gasgemisch intensivst durchmischt. Dadurch wird ein schlagartiger Wechsel in der dispersen Phase erzielt, so dass im Ergebnis das Gas in Form von in der Flüssigkeit fein verteilten Blasen mitgerissen wird.

Die Auslegung einer Ejektorstrahldüse für ein konkretes Durchmischungsproblem kann wiederum an Hand der im Zusammenhang mit der Ejektorstrahldüse in dieser Schrift zitierten Schriften erfolgen (als Konstruktionsmaterialien kommen die für den Ejektor genannten in Betracht).

Die Geschwindigkeit der Treibflüssigkeit beim Austritt aus der Mischdüse wird in der Regel 10 bis 100 m/s, vorzugsweise 15 bis 70 bzw. bis 30 m/s, betragen. Der mittlere Durchmesser der Eintrittsöffnung des Impulsaustauschraums wird in der Regel das 1,1-bis 4fache, vorzugsweise das 1,2- bis 2fache, des mittleren Durchmessers der Mischdüse und die Länge des Impulsaustauschraums in typischer Weise das 3- bis 30fache, vorzugsweise das 3- bis 10flache, seines hydraulischen Durchmessers betragen.

Der aus dem Impulsaustauschraum austretende Massenstrom weist üblicherweise eine mittlere Impulsdichte von 10³ bis 10⁵ N/m², vorzugsweise von 5·10³ bis 2·10⁴ N/m² auf. Im Unterschied dazu beträgt die mittlere Impulsdichte eines Treibstrahls beim erfindungsgemäßen Verfahren typisch 2,5·10⁴ bis 10⁷ N/m², häufig 10⁵ bis 5·10⁶ N/m².

Unter dem mittleren Durchmesser wird dabei der Durchmesser eines Kreises verstanden, der die gleiche Fläche wie der betreffende Querschnitt (dieser kann auch vieleckig sein) der Düse bzw. der Eintrittsöffnung des Impulsaustauschraums aufweist, die beide nicht in notwendiger Weise kreisrund sein müssen. Der Impulsaustauschraum zeigt normalerweise einen konstanten und der Diffusor in der Regel einen sich in Strömungsrichtung vergrößernden Querschnitt. Grundsätzlich kann der Impulsaustauschraum konstruktiv in verschiedenen Formen gestaltet werden, wobei diese Form zweckmäßig der Form der Mischdüse angepasst wird.

Im allgemeinen verwendet man als Impulsaustauschraum zylindrische Rohre und als Diffusor einen Kegelstumpf. Sofern der Impulsaustauschraum als zylindrisches Rohr ausgestaltet ist, wird seine Länge in der Regel das 3- bis 30fache, bevorzugt das 3- bis 10flache seines Durchmessers betragen, der in diesem Fall gleichzeitig sein hydraulischer Durchmesser ist. Sofern der Impulsaustauschraum keinen kreisförmigen oder über seine Länge keinen konstanten Querschnitt aufweist, wird seine Länge normalerweise das 2- bis 30fache, vorzugsweise das 3- bis 10flache seines hydraulischen Durchmessers betragen. Unter dem hydraulischen Durchmesser wird dabei der Durchmesser eines zylindrischen Rohres verstanden, das bei gleichen durchgesetzten Mengen und gleicher Länge den gleichen Druckverlust zeigt, wie der betreffende Impulsaustauschraum.

Die engste Querschnittsfläche der Mischdüse wird sich bei einer erfindungsgemäß geeigneten Ejektorstrahldüse anwendungstechnisch zweckmäßig in einem Abstand von der Treibdüse des Ejektorteils befinden, der dem 1- bis 10fachen des engsten hydraulischen Durchmessers der Mischdüse entspricht.

Ferner wird die engste Querschnittsfläche der Mischdüse bei einer erfindungsgemäß geeigneten Ejektrostrahldüse anwendungstechnisch zweckmäßig nicht tiefer in den Impulsaustauschraum hineinragen (normalerweise zentriert), als es dem ≥ 0- bis 3- bzw. bis 2fachen des engsten hydraulischen Durchmessers der Treibdüse entspricht.

Erfindungsgemäß vorteilhaft ragt die Mischdüse in den Impulsaustauschraum hinein. Grundsätzlich kann die engste Querschnittsfläche der Mischdüse zum Eintritt in den Impulsaustauschraum auch einen Abstand aufweisen, der z. B. bis zum 1fachen oder mehr des engsten hydraulischen Durchmessers der Treibdüse betragen kann.

Ferner wird die engste Querschnittsfläche der Mischdüse einer erfindungsgemäß geeigneten Ejektrostrahldüse anwendungstechnisch vorteilhaft das 1,5- bis 15fache, vorzugsweise das 2- bis 10flache, der engsten Treibdüsenquerschnittsfläche betragen. Die Geschwindigkeit des die Treibdüse im Ejektorteil verlassenden Treibstrahls beträgt in erfindungsgemäß geeigneter Weise bei einer Ejektorstrahldüse in der Regel 20 bis 50 m/s.

Die hier zur möglichen Dimensionierung des Ejektorteils der Ejektorstrahldüse gemachten Angaben treffen auch auf einen alleinigen Ejektor zu.

Anstelle nur einer Ejektorstrahldüse können für das erfindungsgemäße Verfahren, wie bereits im Fall der Anwendung von reinen Ejektoren bereits erwähnt, auch mehrere (ein Bündel von) Ejektorstrahldüsen in ein- und demselben Lagerbehälter zur Anwendung kommen. Wie beim Ejektor auch, kann es erfindungsgemäß zweckmäßig sein (insbesondere zur Vermeidung von Ablagerungen feinteiliger Feststoffe in erfindungsgemäß zu lagernden Mischungen) die Ejektorstrahldüse (bzw. den Ejektor) in der Mitte des Behälters senkrecht nach unten gerichtet anzubringen. Es ist erfindungsgemäß auch möglich, bei einer Ejektorstrahldüse mehrere ihre Mischdüse umfassende Ejektorteile mit einem gemeinsamen Impulsaustauschraum zu vereinigen (zu kombinieren), wobei dessen Querschnitt der Eintrittsöffnung der Summe des für die jeweilige Mischdüse bei deren Einzelanwendung benötigten Querschnitts entsprechen sollte.

Grundsätzlich können der Impulsaustauschraum und der die Mischdüse mitumfassende Ejektorteil einer Ejektorstrahldüse über Stege (vorzugsweise über drei (ermöglichen eine voll befriedigende Zentrierung) Stege, von denen jeweils zwei einen Winkel von 120° einschließen) miteinander verbunden sein. Sie können aber auch ineinander verschraubt sein. In diesem Fall gestatten in entsprechender Weise angebrachte Schlitze das Ansaugen der Umgebungsflüssigkeit.

In typischer Weise kann bei der Ausübung des erfindungsgemäßen Verfahrens mit einer Ejektorstrahldüse das Verhältnis von in den Impulsaustauschraum geführtem Gesamtflüssigkeitsvolumen zu zugeführtem Gasvolumen im Bereich von 0,1 bis 10 liegen.

Durch Impulsaustausch im Impulsaustauschraum und durch Umwandlung der kinetischen Energie in Druckenergie im Diffusor erfolgt in der Ejektorstrahldüse der statische Druckaufbau. Dieser Verdichtungsvorgang findet wegen der größeren Flüssigkeitsmenge mit einem besseren Wirkungsgrad als bei Ejektoren statt. Weiterhin wirkt sich vorteilhaft aus, dass die Strömungsverluste durch Wandreibung in dem, gegenüber dem Mischraum üblicher Ejektoren im Durchmesser in der Regel größeren Impulsaustauschraum bei sonst gleichen Verhältnissen in folge kleinerer Strömungsgeschwindigkeit geringer sind.

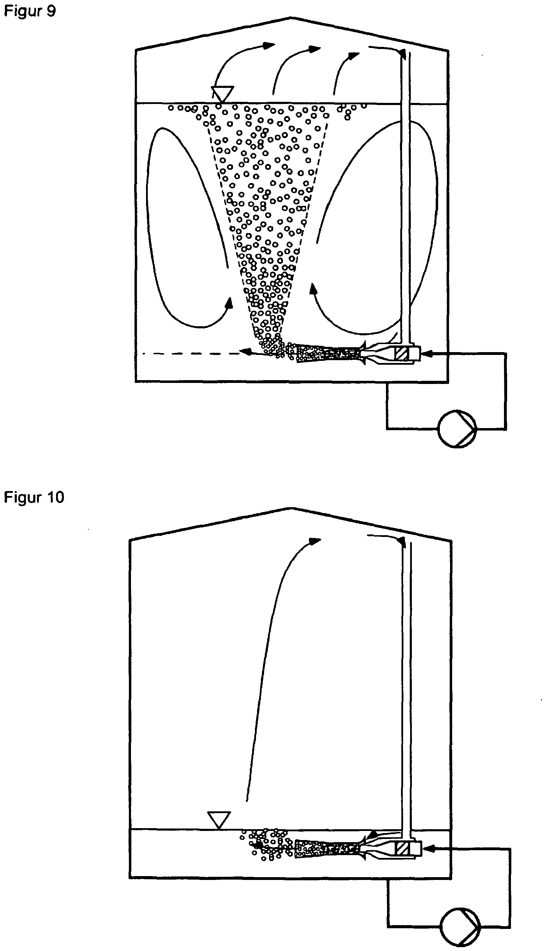

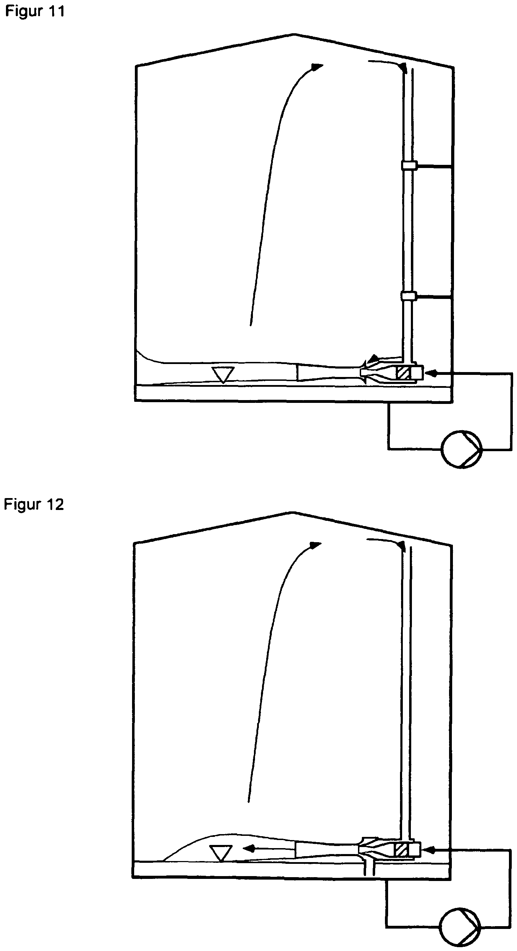

Im übrigen zeigt die Figur 9 dieser Schrift schematisch eine Ausführungsform eines erfindungsgemäßen primär gasinduzierten Durchmischens eines mit einer Flüssigkeit oder mit einer Mischung aus einer Flüssigkeit und einem feinteiligen Feststoff gefüllten Tanks, unter Einsatz einer bevorzugten Ejektorstrahldüse als Saugvorrichtung. Durch die Möglichkeit des waagrechten Einbaus der Ejektorstrahldüse kann der Flüssigkeitsspiegel (der Trennspiegel) entsprechend Figur 10 vergleichsweise tief abgesenkt werden, bevor keine ausreichende Überdeckung mit Flüssigkeit mehr vorhanden ist. Bei weiterer Absenkung des Flüssigkeitsspiegels (Trennspiegels) bis unterhalb der Düse wird keine zusätzliche Flüssigkeit mehr angesaugt. Der waagrecht austretende Strahl erzeugt allerdings (insbesondere bei Mitverwendung eines Drallkörpers vor der Treibdüse im Ejektorteil) beim Auftreffen auf die Behälterwand keine nennenswerte Spraymenge mehr (Figur 11), da er die Behälterwand nicht mehr als gebündelter Strahl erreicht.

In einer erfindungsgemäß besonders bevorzugten Ausführungsform, kann als Saugvorrichtung für das erfindungsgemäße Verfahren gemäß Figur 12 aber auch eine Ejektorstrahldüse eingesetzt werden, bei der der Ansaugbereich (für die Umgebungsflüssigkeit) zwischen Mischdüse und Impulsaustauschraum (Impulsaustauschrohr) mit der Maßgabe mit einer wenigstens eine Öffnung (wenigstens eine Eintrittsöffnung (wenigstens eine Ansaugöffnung)) aufwesenden Ummantelung versehen ist, dass die wenigstens eine Öffnung unterhalb (unterhalb meint hier vom zentralen Strahl ausgehend in Richtung des Behälter- bzw. Tankbodens) des von der Mischdüse in den Impulsaustauschraum führenden zentralen Strahls liegt. Ganz besonders bevorzugt ist diese wenigstens eine Eintrittsöffnung als ein in Richtung der Behälterbodens führendes (auslaufendes) Tauchrohr ausgeführt und befindet sich dadurch in der Nähe des Behälterbodens (dies bedingt eine besonders rasche Durchmischung aufgrund des Ansaugens von unten). Prinzipiell kann der Querschnitt des Tauchrohres beliebig, d. h., kreisrund, oval oder vieleckig sein. Normalerweise ist der Querschnitt des Tauchrohres beim erfindungsgemäßen Verfahren über seine Länge konstant. Tauchrohre mit kreisrundem Querschnitt sind erfindungsgemäß bevorzugt. Der mittlere Durchmesser der wenigsten einen unterhalb des von der Mischdüse in den Impulsaustauschraum führenden zentralen Strahls liegenden Ansaugöffnung wird normalerweise das 1- bis 20fache, vorzugsweise das 2- bis 10fache des mittleren Durchmessers der Mischdüse betragen. Generell wird das Tauchrohr so gestaltet, dass sein Durchströmen einen möglichst geringen Druckverlust bedingt. Grundsätzlich kann die wenigstens eine Ansaugöffnung auch als über die Länge des Tauchrohres in dessen Wand verteilt angebrachte Löcher und/oder Schlitze ausgeführt sein. Auch kann das Tauchrohr an seinem in Bodennähe befindlichen Ende wie ein Fleischerhaken nach oben gebogen sein, so dass die Ansaugöffnung nicht zum Behälterboden, sondern zum Behälterdach(deckel) weist. Die Biegung kann aber auch wie bei einem Golfschläger ausgeführt sein und mit der Ansaugöffnung parallel zum Behälterboden auslaufen. Weiterhin kann das Tauchrohr samt Ansaugöffnung in einen auf dem Behälterboden stehenden, nach oben offenen, Topf ragen. Günstig ist auch, dass die Ansaugöffnung des Tauchrohrs und der Auslass aus dem Impulsaustauschraum(rohr) räumlich voneinander (z. B. in maximaler Entfernung voneinander) unabhängig platziert werden können (in ihrer räumlichen Position nicht mehr in notwendiger Weise miteinander korreliert sind). Die Ausführungsvariante mit Tauchrohr (dieses kann mit der Ummantelung nahtlos verschweißt, oder in die Ummantelung eingeschraubt, oder mit einem in der Ummantelung befindlichen entsprechenden Anschluss (z. B. angeflanscht an einen Anschlussstutzen) verbunden sein) gestattet selbst bei extrem abgesenktem Füllstand im Lagerbehälter noch eine im wesentlichen nahezu unbeeinträchtige Durchführung des erfindungsgemäßen Verfahrens. Problematisch wird diese allenfalls dann, wenn die Förderpumpe kurzzeitig abgeschaltet wird. In diesem Fall ist das Tauchrohr zur Mischdüse hin nicht mehr mit der gelagerten Flüssigkeit oder der gelagerten Mischung aus Flüssigkeit und feinteiligem Feststoff gefüllt, sondern mit Gas. Bei ausreichender Verdrallung und/oder Zerteilung des Treibstrahls der Treibdüse (z. B. mittels eines Drallkörpers und/oder eines Treibstrahlaufteilers und/oder einer tangentialen Zufuhr des Treibstrahls) im Ejektorteil der Ejektorstrahldüse ist die resultierende Saugkraft jedoch ausreichend, um unmittelbar nach der Wiederinbetriebnahme den Flüssigkeits- bzw. Mischungsstand im Tauchrohr im erforderlichen Ausmaß anzuheben, und die erfindungsgemäße Verfahrensweise fortsetzen zu können.

Das Volumen der Gasphase im Behälter sollte beim erfindungsgemäßen Verfahren wenigstens 5 Vol.-%, oder wenigstens 10 Vol.-% des im Behälter gelagerten Flüssigkeits- bzw. Mischungsvolumens betragen. Es kann in gleicher Weise bezogen aber auch 30 Vol.-%, 60 Vol.-%, 90 Vol.-%, 150 Vol.-%, 250 Vol.-%, 350 Vol.-% und mehr betragen.

Ferner ist es erfindungsgemäß, wenn je Minute pro Liter an flüssigem Inhalt des Lagerbehälters beim erfindungsgemäßen Verfahren wenigstens 10⁻⁵ Normliter (Gasvolumen bei 0 °C und 1 atm in der Einheit Liter) an Gas (normalerweise aber nicht mehr als 10⁻¹ Normliter) eingedüst werden.

Der Behälter selbst weist mit Vorteil zylindrische (z. B. mit kreisförmigem, oder quadratischem, oder rechteckigem Querschnitt) Struktur auf, die nach oben durch ein konisches Dach oder durch ein halbkugelförmiges bzw. domförmiges Dach geschlossen sind.

Das erfindungsgemäße Verfahren eignet sich zur erfindungsgemäßen Lagerung aller erfindungsgemäßen Flüssigkeiten. Diese sind dabei in der Regel mit einem Gas überfrachtet, das mit dem Dampf der Flüssigkeit gesättigt ist (d. h., die Gasphase besteht nicht nur aus verdampfter Flüssigkeit).

Selbstverständlich können solche Gase Luft, oder sonstige Gemische aus molekularem Sauerstoff und Inertgas sein. Der Absolutdruck im Tank kann z. B. von Atmosphärendruck bis 50 bar betragen, die Temperatur im Tank kann z. B. bei 0 (oder weniger) bis 100 (oder mehr) °C liegen.

Beide vorgenannten Größen unterliegen beim erfindungsgemäßen Verfahren jedoch keiner Beschränkung.

Von besonderem Vorteil ist das erfindungsgemäße Verfahren dann, wenn es sich bei der gelagerten Flüssigkeit um eine erfindungsgemäße ungesättigte organische Verbindung (z.B. N-Vinylformamid) oder um eine wenigstens diese organische Verbindung enthaltende Lösung handelt, die erfindungsgemäß einen Polymerisationsinhibitor zum Zweck der Inhibierung unerwünschter radikalischer Polymerisationen zugesetzt enthalten.

Als weitere erfindungsgemäße Beispiele solcher wenigstens einfach ethylenisch ungesättigten organischen Verbindungen seien genannt Acrolein, Methacrolein, Acrylsäure, Methacrylsäure sowie Ester aus Acrylsäure und/oder Methacrylsäure und ein- oder mehrwertigen Alkanolen. Zu diesen Estern zählen insbesondere jene, deren Alkohol ein bis zwanzig C-Atome, oder ein bis zwölf C-Atome, oder ein bis acht C-Atome aufweisen. Als beispielhafte Vertreter solcher Ester seien genannt Methylacrylat, Ethylacrylat, n-Butylacrylat, iso-Butylacrylat, tert.-Butylacrylat, 2-Ethylhexyl-acrylat, Hydroxyethylacrylat, Hydroxypropylacrylat, Hydroxyethylmethacrylat, Hydroxypropylmethacrylat, Methylmethacrylat, Ethylmethacrylat, n-Butylmethacrylat und tert.-Butylmethacrylat. Als Inhibitoren radikalischer Polymerisationen kommen für vorgenannte Monomeren und ihre Lösungen in organischen oder wässrigen Lösungsmitteln z. B. der Monomethylether des Hydrochinon (MEHQ), Hydrochinone, Phenole (z. B. 2,4-Dimethyl-6-6-butylphenol), Chinone, Butylbrenzkatechin, Phenothiazin, Diphenylamin, p-Phenylendiamine, Nitroxyl-Radikale und/oder Nitrosoverbindungen wie z. B. Nitrophenole in Betracht (sowie alle anderen in der WO 00/64947 genannten Polymerisationsinhibitoren). Bezogen auf den Monomerengehalt kann die zum Zweck der Lagerung zugesetzte Menge an Polymerisationsinhibitoren 0,5 bis 1000 (häufig 1 bis 600 Gew.-ppm oder 2 bis 500 Gew.-ppm) Gew.-ppm betragen.

Im Fall von glacial Acrylsäure = Reinacrylsäure (Acrylsäuregehalt ≥ 99,5 Gew.-%) sind in der Regel 200 ± 20 Gew.-ppm MEHQ als Lagerinhibitor zugesetzt (Lagertemperaturempfehlung: 15 bis 25 °C). Im Fall von n-Butylacrylat (n-Butylacrylatgehalt ≥ 99,5 Gew.-%) und den anderen genannten (Meth)acrylestern werden in der Regel 15 ± 5 Gew.-ppm MEHQ als Lagerstabilisator zugesetzt (Lagertemperaturempfehlung: 20 bis 35 °C). MEHQ ist auch der bevorzugte Lagerstabilisator für die anderen genannten (Meth)acrylmonomeren und deren Lösungen.

Wie bereits erwähnt, entfalten vorgenannte Polymerisationsinhibitoren (insbesondere MEHQ) ihre volle Inhibierwirkung in der Regel lediglich im Beisein von molekularem Sauerstoff. Insbesondere (Meth)acrylmonomere vermögen mit molekularem Sauerstoff jedoch explosive Gemische zu bilden.

Um eine entsprechende Explosion auch im Fall einer Versprühung (Sprayausbildung) im Lagertank auszuschließen, musste bisher entweder über eine sicherheitstechnisch hoch verfügbare Flüssigkeitsstandkontrolle eine solche Spraybildung verhindert, oder der Sauerstoffgehalt der Gasphase im Lagertank entsprechend begrenzt werden, wie es die WO 2005/049543 im Kontext mit der US-A 6,910,511 empfiehlt.

Die Anwendung der erfindungsgemäßen Verfahrensweise, mit Hilfe derer sich auch bei niederem Flüssigkeitsstand im Behälter eine Sprayausbildung vermeiden lässt, gestattet demgegenüber die vergleichsweise einfache sichere Überschichtung des Tankinhalts mit an der im Tank gelagerten Flüssigkeit gesättigter Luft. Handelt es sich jedoch bei der gelagerten Acrylsäure (dem gelagerten Acrolein) um Acrylsäure (Acrolein), die durch heterogen katalysierte partielle Gasphasenoxidation von Propylen im Beisein von Propan oder durch heterogen katalysierte partielle Gasphasenoxidation des Propans selbst erzeugt wurde, fällt die zu lagernde rohe Acrylsäure (das zu lagernde rohe Acrolein) nach ihrer Abtrennung aus dem Produktgasgemisch in der Regel in an Propan gesättigter Form an. In diesem Fall enthält die Gasatmosphäre zusätzlich brennbares Propan. Für eine sichere Lagerung ist es in diesem Fall angeraten, das Unterschreiten der Sauerstoffgrenzkonzentration durch Lagerung unter Magerluft gemäß der WO 2005/049543 in der Gasphase einzuhalten.

Grundsätzlich kann mit abnehmendem Füllstand im Lagerbehälter beim erfindungsgemäßen Verfahren die Zuführ(Rückführ)rate zur Ausbildung des Treibstrahls vermindert werden.

Ganz generell wird das Einbringen von molekularem Sauerstoff in die zu lagernde Flüssigkeit oder in die lagernde Mischung beim erfindungsgemäßen Verfahren sehr einfach gemacht.

Das erfindungsgemäße Verfahren eignet sich u. a. auch deshalb insbesondere für Tanklager mit besonders großem Tankinhalt.

Damit umfasst die vorliegende Patentanmeldung insbesondere die nachfolgenden erfindungsgemäßen Ausführungsformen:

### Ausführungsformen:

1. Ein Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl (0) einer im Behälter in der Flüssigkeit oder in der Mischung befindlichen Saugvorrichtung, die mit Hilfe des Treibstrahls (0) aus der im Behälter befindlichen Gasphase Gas ansaugt und das angesaugte Gas gemeinsam mit dem Treibstrahl (0) in die im Behälter befindliche Flüssigkeit oder Mischung entlässt, dadurch gekennzeichnet, dass die Gasphase molekularen Sauerstoff und die Flüssigphase wenigstens eine der organischen Verbindungen aus der Gruppe bestehend aus N-Vinylformamid, Acrolein, Methacrolein, Acrylsäure, Methacrylsäure, Ester der Acrylsäure und Ester der Methacrylsäure enthält sowie in der Flüssigkeit wenigstens ein Polymerisationsinhibitor gelöst ist, und je Minute pro Liter an im Behälter befindlicher Flüssigkeit oder Mischung aus Flüssigkeit und feinteiligem Feststoff wenigstens 10⁻⁵ Normliter Gas aus der Gasphase angesaugt und in die im Behälter befindliche Flüssigkeit oder Mischung mit der Maßgabe entlassen werden, dass von dem gemeinsam mit dem Treibstrahl in die im Behälter befindliche Flüssigkeit oder Mischung entlassenen aus der Gasphase angesaugten Gas ≤ 1 Vol.-% beim einmaligen Durchperlen durch die gelagerte Flüssigkeit oder Mischung chemisch verändert werden.
2. Ein Verfahren gemäß Ausführungsform 1, dadurch gekennzeichnet, dass die Saugvorrichtung wenigstens einen Ejektor umfasst, der eine Treibdüse (1) und einen Ansaugraum (4), der mit der Gasphase (über eine Verbindung, durch die Gas aus der Gasphase angesaugt werden kann) verbunden ist, aufweist, und durch dessen Treibdüse (1) der Treibstrahl (0) geführt wird.
3. Ein Verfahren gemäß Ausführungsform 2, dadurch gekennzeichnet, dass dem Treibstrahl (0) vor seinem Durchgang durch die Treibdüse (1) eine Drallbewegung aufgeprägt wird.
4. Ein Verfahren gemäß Ausführungsform 3, dadurch gekennzeichnet, dass die Drallbewegung mit einem vor die Treibdüse (1) eingebauten Drallkörper (9) aufgeprägt wird.
5. Ein Verfahren gemäß Ausführungsform 3, dadurch gekennzeichnet, dass die Drallbewegung dadurch aufgeprägt wird, dass man die Treibflüssigkeit (0) der Treibdüse (1) tangential zuführt.
6. Ein Verfahren gemäß einer der Ausführungsformen 1 bis 5, dadurch gekennzeichnet, dass der Treibstrahl (0) beim Durchgang durch die Treibdüse (1) zerteilt wird.
7. Ein Verfahren gemäß Ausführungsform 6, dadurch gekennzeichnet, dass die Treibdüse (1) eine Siebdüse oder eine Spaltdüse ist.
8. Ein Verfahren gemäß Ausführungsform 1, dadurch gekennzeichnet, dass die Saugvorrichtung wenigstens eine Ejektorstrahldüse umfasst, die eine Treibdüse (1), einen die Treibdüse (1) umgebenden und in eine Mischdüse (10) auslaufenden Ansaugraum (4) und einen Impulsaustauschraum (7), in den der Ausgang der Mischdüse (10) zeigt, aufweist, wobei der Ansaugraum (4) mit der Gasphase (über eine Verbindung, durch die Gas aus der Gasphase angesaugt werden kann) verbunden ist und durch deren Treibdüse (1) der Treibstrahl (0) (im Gemisch mit dem angesaugten Gas) über die Mischdüse (10) in den Impulsaustauschraum (7) geführt wird.
9. Ein Verfahren gemäß Ausführungsform 8, dadurch gekennzeichnet, dass dem Treibstrahl (0) vor seinem Durchgang durch die Treibdüse (1) eine Drallbewegung aufgeprägt wird.
10. Ein Verfahren gemäß Ausführungsform 9, dadurch gekennzeichnet, dass die Drallbewegung mit einem vor die Treibdüse (1) eingebauten Drallkörper (9) aufgeprägt wird.
11. Ein Verfahren gemäß Ausführungsform 9, dadurch gekennzeichnet, dass die Drallbewegung dadurch aufgeprägt wird, dass man die Treibflüssigkeit der Treibdüse (1) tangential zuführt.
12. Ein Verfahren gemäß einer der Ausführungsformen 8 bis 11, dadurch gekennzeichnet, dass der Treibstrahl (0) beim Durchgang durch die Treibdüse (1) zerteilt wird.
13. Ein Verfahren gemäß Ausführungsform 12, dadurch gekennzeichnet, dass die Treibdüse (1) eine Siebdüse oder eine Spaltdüse ist.
14. Ein Verfahren gemäß einer der Ausführungsformen 1 bis 7, dadurch gekennzeichnet, dass der Ejektor waagrecht in den Behälter eingebaut ist.
15. Ein Verfahren gemäß einer der Ausführungsformen 8 bis 13, dadurch gekennzeichnet, dass die Ejektorstrahldüse waagrecht in den Behälter eingebaut ist.
16. Ein Verfahren gemäß einer der Ausführungsformen 8 bis 13 sowie 15, dadurch gekennzeichnet, dass der Übergang von der Mischdüse (10) in den Impulsaustauschraum (7) mit der Maßgabe mit einer wenigstens eine Öffnung aufweisenden Ummantelung versehen ist, dass die wenigstens eine Öffnung unterhalb des von der Mischdüse (10) in den Impulsaustauschraum (7) führenden zentralen Strahls (11) liegt.
17. Ein Verfahren gemäß einer der Ausführungsformen 8 bis 13 sowie 15, dadurch gekennzeichnet, dass der Übergang von der Mischdüse (10) in den Impulsaustauschraum (7) mit einer Ummantelung versehen ist, die wenigstens eine Öffnung aufweist, die zu einem in Richtung des Behälterbodens führenden Tauchrohr ausläuft.
18. Ein Verfahren gemäß einer der Ausführungsformen 1 bis 17, dadurch gekennzeichnet, dass das Volumen der Gasphase im Behälter wenigstens 5 Vol.-% des im Behälter gelagerten Flüssigkeits- oder Mischungsvolumens beträgt.
19. Ein Verfahren gemäß einer der Ausführungsformen 1 bis 18, dadurch gekennzeichnet, dass die in den Behälter als Treibstrahl (0) zugeführte Flüssigkeit oder Mischung einen Teil oder die Gesamtmenge einer zuvor aus dem Behälter entnommenen Teilmenge der im Behälter befindlichen Flüssigkeit oder Mischung umfasst.
20. Ein Verfahren gemäß einer der Ausführungsformen 1 bis 19, dadurch gekennzeichnet, dass die in den Behälter als Treibstrahl (0) zugeführte Flüssigkeit oder Mischung keine zuvor aus dem Behälter entnommene Teilmenge der im Behälter befindlichen Flüssigkeit oder Mischung umfasst.
21. Ein Verfahren gemäß einer der Ausführungsformen 1 bis 20, dadurch gekennzeichnet, dass die in den Behälter als Treibstrahl (0) zugeführte Flüssigkeit oder Mischung zuvor durch einen Wärmeaustauscher geführt worden ist.

### Ausführungsbeispiel

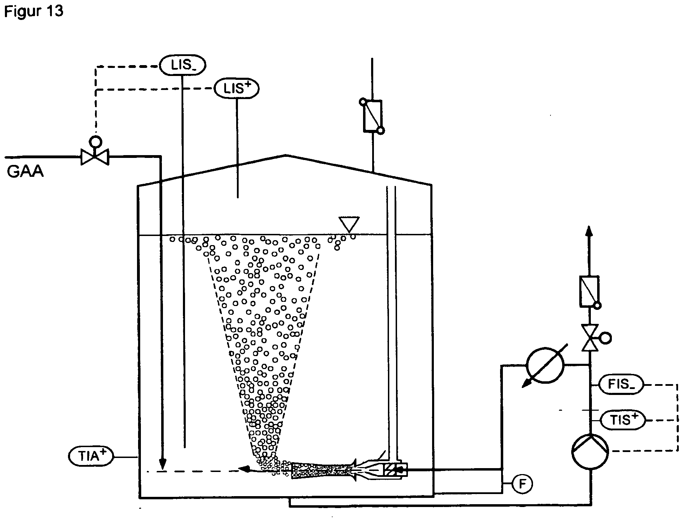

In einem im Freien befindlichen Tank (Wanddicke: 5 mm Fertigungsmaterial: Edelstahl der DIN Nr. 1.4541) gemäß Figur 13 (kreiszylindrische Grundfläche mit einem Durchmesser von 8,5 m und einer Höhe von 10 m bis zum Beginn des konischen Dachs) wurde mit 200 Gew.-ppm MEHQ stabilisierte Reinacrylsäure (GAA) bei einer angestrebten Innentemperatur von 20 °C unter Atmosphärendruck bei maximaler Füllhöhe gelagert. Die maximale Füllhöhe im Lagertank betrug 9 m. Das bei maximaler Füllhöhe verbleibende Gasvolumen betrug 69 m³.

Die Entnahme aus dem Tank erfolgte mittels einer Kreiselpumpe vom Typ CPK 50-200 der Fa. KSB Aktiengesellschaft in D-67227 Frankenthal.

Als Sperrflüssigkeit enthielt die Pumpe mit doppelter Gleitringdichtung ein Gemisch aus Ethylenglycol und Wasser. Die Überdeckung der Reinacrylsäure im Lagertank erfolgte mittels Luft. Über ein Abgassystem, welches über eine Fackel zur Atmosphäre hin geöffnet war (Öffnungsquerschnitt im konischen Dach = 20 cm²) konnte beim Befüllen zur Druckentlastung Gas aus der Gasphase des Tanks an eine Fackel abgegeben werden.

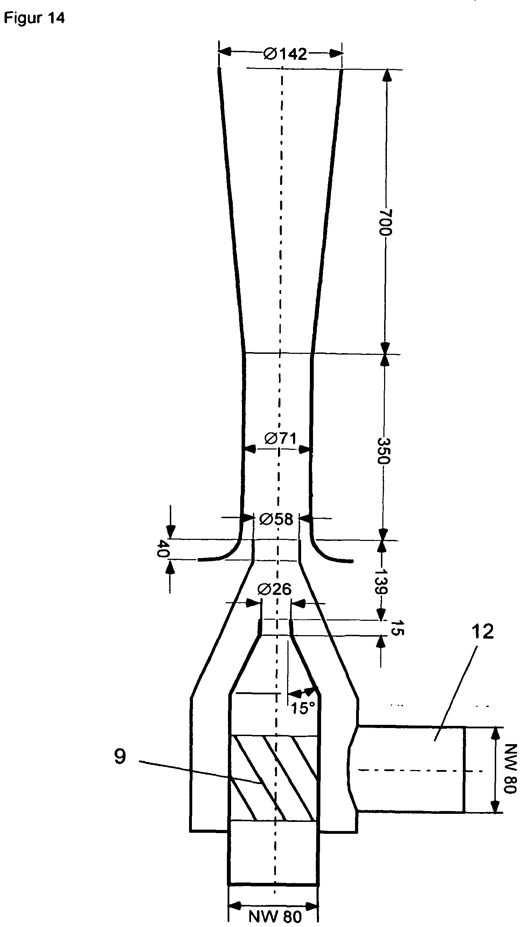

In entsprechender Weise wurde bei der Entnahme von Reinacrylsäure aus dem Tank über eine Druckhaltevorrichtung zum Druckausgleich Luft nachdosiert. In Bodennähe war wie in Figur 13 ersichtlich die Ejektorstrahldüse (gefertigt aus DIN-1.4541 Edelstahl) aus Figur 14 waagrecht so angebracht, dass der Diffusor derselben etwa in die Tankmitte ragte. Die Angaben in Figur 14 sind die zugehörigen Dimensionen (lichten Weiten) der Ejektorstrahldüse in mm bzw. Winkel in Grad (NW steht für Nennweite). Die Wanddicken betrugen 1 bis 6 mm. Figur 15 zeigt zusätzlich den vor der Treibdüse des Ejektorteils befindlichen Drallkörper von der Seite und von vorne, sowie den Drallwinkel, der 30° betrug. Figur 14 zeigt außerdem den Anschluss (12) des in die Gasphase des Tanks ragenden Steigrohres an den Ansaugraum des Ejektorteils der Ejektorstrahldüse.

Mit der Kreiselpumpe wurden dem Tank über einen Zeitraum von 1 Woche kontinuierlich 40 m³/h an Reinacrylsäure entnommen und über den Wärmeaustauscher in Figur 13 als Treibstrahl in die Ejektorstrahldüse zurückgeführt. Unabhängig von der Außentemperatur (die im Versuchszeitraum im Intervall ± 15 ° schwankte) konnte die Temperatur an der Entnahmestelle des Lagertanks innerhalb des Intervalls 20 ± 1 °C konstant gehalten werden.

Schließlich wurden in den Tank von oben (bei maximaler Füllhöhe) 1 I einer 0,1 Gew.-%-Lösung von Phenothiazin in Reinacrylsäure auf einmal zugegeben. Nach 5 Minuten war die Gleichverteilungskonzentration des zugegebenen Phenothiazin im Intervall ±10 % um ihren theoretischen Wert an der Entnahmestelle angekommen.

Anschließend wurde die Rückführrate beibehalten, die Entnahmemenge jedoch um 20 m³/h erhöht, d. h., der Tank mit 20 m³/h entleert. Es war problemlos möglich aus dem Tank so 99 % seines flüssigen Füllinhaltes zu entnehmen, ohne dass im Tank eine Spraybildung erfolgte (grundsätzlich konnte dem Tank auch über einen nicht über die Kreiselpumpe führenden Ablauf Reinacrylsäure entnommen werden).

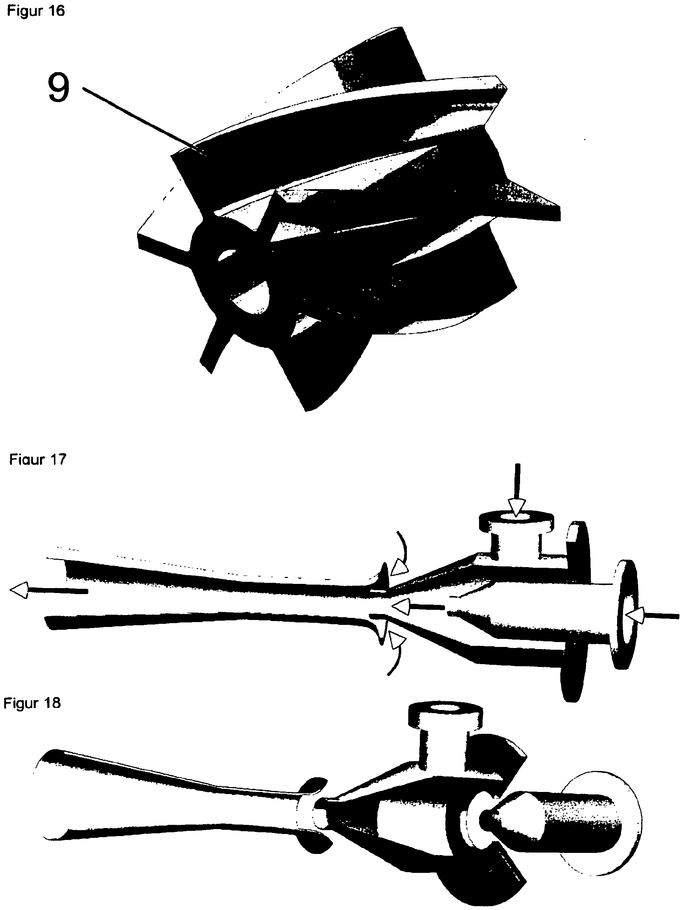

Figur 16 zeigt zusätzlich die dreidimensionale Darstellung des verwendeten Drallkörpers.

Figur 17 zeigt zur Veranschaulichung eine dreidimensionale Darstellung der Ejektorstrahldüse (aufgeschnitten) und Figur 18 zeigt die zugehörige Explosionsdarstellung.

Im übrigen stehen in Figur 13 die Abkürzungen:

| | |
|---|---|
| TIA⁺ | für "temperature indicator alarm"; |
| LIS | für "levevel indicator switch"; als Überfüllschutz (+) und als Unterfüllschutz (-); |
| TIS⁺ | für "temperature indicator security"; |
| FIS | für "flow indicator security"; |
| F | für "flow" (kleiner Sicherheitsfluß als Pumpenschutz). |

Zusätzlich zeigt Figur 13 am Behälterdach eine beidseitig wirkende Rückschlagklappe sowie hinter der Pumpe aber vor der Entnahme eine einseitig wirkende (nur nach außen öffnende) Rückschlagklappe.

## Patentansprüche

1. Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl (0) einer im Behälter in der Flüssigkeit oder in der Mischung befindlichen Saugvorrichtung, die mit Hilfe des Treibstrahls (0) aus der im Behälter befindlichen Gasphase Gas ansaugt und das angesaugte Gas gemeinsam mit dem Treibstrahl (0) in die im Behälter befindliche Flüssigkeit oder Mischung entlässt, **dadurch gekennzeichnet, dass** die Gasphase molekularen Sauerstoff und die Flüssigphase wenigstens eine der organischen Verbindungen aus der Gruppe bestehend aus N-Vinylformamid, Acrolein, Methacrolein, Acrylsäure, Methacrylsäure, Ester der Acrylsäure und Ester der Methacrylsäure enthält sowie in der Flüssigkeit wenigstens ein Polymerisationsinhibitor gelöst ist, und je Minute pro Liter an im Behälter befindlicher Flüssigkeit oder Mischung aus Flüssigkeit und feinteiligem Feststoff wenigstens 10⁻⁵ Normliter Gas aus der Gasphase angesaugt und in die im Behälter befindliche Flüssigkeit oder Mischung mit der Maßgabe entlassen werden, dass von dem gemeinsam mit dem Treibstrahl in die im Behälter befindliche Flüssigkeit oder Mischung entlassenen aus der Gasphase angesaugten Gas ≤ 1 Vol.-% beim einmaligen Durchperlen durch die gelagerte Flüssigkeit oder Mischung chemisch verändert werden.

2. Verfahren nach Anspruch 1, **dadurch gekennzeichnet, dass** die Saugvorrichtung wenigstens einen Ejektor umfasst, der eine Treibdüse (1) und einen Ansaugraum (4), der mit der Gasphase verbunden ist, aufweist und durch dessen Treibdüse (1) der Treibstrahl (0) geführt wird.

3. Verfahren nach Anspruch 2, **dadurch gekennzeichnet, dass** dem Treibstrahl (0) vor seinem Durchgang durch die Treibdüse (1) eine Drallbewegung aufgeprägt wird.

4. Verfahren nach Anspruch 3, **dadurch gekennzeichnet, dass** die Drallbewegung mit einem vor die Treibdüse (1) eingebauten Drallkörper (9) aufgeprägt wird.

5. Verfahren nach Anspruch 3, **dadurch gekennzeichnet, dass** die Drallbewegung dadurch aufgeprägt wird, dass man die Treibflüssigkeit (0) der Treibdüse (1) tangential zuführt.

6. Verfahren nach einem der Ansprüche 1 bis 5, **dadurch gekennzeichnet, dass** der Treibstrahl (0) beim Durchgang durch die Treibdüse (1) zerteilt wird.

7. Verfahren nach Anspruch 6, **dadurch gekennzeichnet, dass** die Treibdüse (1) eine Siebdüse oder eine Spaltdüse ist.

8. Verfahren nach Anspruch 1, **dadurch gekennzeichnet, dass** die Saugvorrichtung wenigstens eine Ejektorstrahldüse umfasst, die eine Treibdüse (1), einen die Treibdüse umgebenden und in eine Mischdüse (10) auslaufenden Ansaugraum (4) und einen Impulsaustauschraum (7), in den der Ausgang der Mischdüse (10) zeigt, aufweist, wobei der Ansaugraum (4) mit der Gasphase verbunden ist und durch deren Treibdüse (1) der Treibstrahl (0) über die Mischdüse (10) in den Impulsaustauschraum (7) geführt wird.

9. Verfahren nach Anspruch 8, **dadurch gekennzeichnet, dass** dem Treibstrahl (0) vor seinem Durchgang durch die Treibdüse (1) eine Drallbewegung aufgeprägt wird.

10. Verfahren nach Anspruch 9, **dadurch gekennzeichnet, dass** die Drallbewegung mit einem vor die Treibdüse (1) eingebauten Drallkörper (9) aufgeprägt wird.

11. Verfahren nach Anspruch 9, **dadurch gekennzeichnet, dass** die Drallbewegung dadurch aufgeprägt wird, dass man die Treibflüssigkeit (0) der Treibdüse (1) tangential zuführt.

12. Verfahren nach einem der Ansprüche 8 bis 11, **dadurch gekennzeichnet, dass** der Treibstrahl (0) beim Durchgang durch die Treibdüse (1) zerteilt wird.

13. Verfahren nach Anspruch 12, **dadurch gekennzeichnet, dass** die Treibdüse (1) eine Siebdüse oder eine Spaltdüse ist.

14. Verfahren nach einem der Ansprüche 1 bis 7, **dadurch gekennzeichnet, dass** der Ejektor waagrecht in den Behälter eingebaut ist.

15. Verfahren nach einem der Ansprüche 8 bis 13, **dadurch gekennzeichnet, dass** die Ejektorstrahldüse waagrecht in den Behälter eingebaut ist.

16. Verfahren nach einem der Ansprüche 8 bis 13 sowie 15, **dadurch gekennzeichnet, dass** der Übergang von der Mischdüse (10) in den Impulsaustauschraum (7) mit der Maßgabe mit einer wenigstens eine Öffnung aufweisenden Ummantelung versehen ist, dass die wenigstens eine Öffnung unterhalb des von der Mischdüse (10) in den Impulsaustauschraum (7) führenden zentralen Strahls (11) liegt.

17. Verfahren nach einem der Ansprüche 8 bis 13 sowie 15, **dadurch gekennzeichnet, dass** der Übergang von der Mischdüse (10) in den Impulsaustauschraum (7) mit einer Ummantelung versehen ist, die wenigstens eine Öffnung aufweist, die zu einem in Richtung des Behälterbodens führenden Tauchrohr ausläuft.

18. Verfahren nach einem der Ansprüche 1 bis 17, **dadurch gekennzeichnet, dass** das Volumen der Gasphase im Behälter wenigstens 5 Vol.-% des im Behälter gelagerten Flüssigkeits- oder Mischungsvolumens beträgt.

19. Verfahren nach einem der Ansprüche 1 bis 18, **dadurch gekennzeichnet, dass** die in den Behälter als Treibstrahl (0) zugeführte Flüssigkeit oder Mischung einen Teil oder die Gesamtmenge einer zuvor aus dem Behälter entnommenen Teilmenge der im Behälter befindlichen Flüssigkeit oder Mischung umfasst.

20. Verfahren nach einem der Ansprüche 1 bis 19, **dadurch gekennzeichnet, dass** die in den Behälter als Treibstrahl (0) zugeführte Flüssigkeit oder Mischung keine zuvor aus dem Behälter entnommene Teilmenge der im Behälter befindlichen Flüssigkeit oder Mischung umfasst.

21. Verfahren nach einem der Ansprüche 1 bis 20, **dadurch gekennzeichnet, dass** die in den Behälter als Treibstrahl (0) zugeführte Flüssigkeit oder Mischung zuvor durch einen Wärmeaustauscher geführt worden ist.

## Claims

1. A process for mixing a liquid or mixture of a liquid and a fine solid present in an essentially self-contained vessel, with the proviso that the liquid or mixture fills only part of the internal volume of the vessel occupiable by a fluid phase, and the remaining occupiable internal volume of the vessel is filled by a gas phase, comprising supply of essentially the same liquid or essentially the same mixture into the vessel as a motive jet (0) of a suction apparatus which is disposed in the liquid or in the mixture in the vessel and which, with the aid of the motive jet (0), sucks in gas from the gas phase present in the vessel and releases the sucked-in gas together with the motive jet (0) into the liquid or mixture present in the vessel, wherein the gas phase comprises molecular oxygen, and the liquid phase at least one of the organic compounds from the group consisting of N-vinylformamide, acrolein, methacrolein, acrylic acid, methacrylic acid, esters of acrylic acid and esters of methacrylic acid, and at least one polymerisation inhibitor is dissolved in the liquid, and at least 10⁻⁵ standard liter of gas per minute per liter of liquid or mixture of liquid and fine solid present in the vessel is sucked out of the gas phase and released into the liquid or mixture present in the vessel, with the proviso that ≤ 1% by volume of the gas which is sucked out of the gas phase and released into the liquid or mixture present in the vessel together with the motive jet is chemically changed as it is bubbled once through the stored liquid or mixture.

2. The process according to claim 1, wherein the suction apparatus comprises at least one ejector which has a motive nozzle (1) and a suction chamber (4) which is connected to the gas phase, and through whose motive nozzle (1) the motive jet (0) is conducted.

3. The process according to claim 2, wherein a swirling motion is imparted to the motive jet (0) before it passes through the motive nozzle (1).

4. The process according to claim 3, wherein the swirling motion is imparted with a swirl body (9) installed upstream of the motive nozzle (1).

5. The process according to claim 3, wherein the swirling motion is imparted by supplying the motive liquid (0) to the motive nozzle (1) tangentially.

6. The process according to any of claims 1 to 5, wherein the motive jet (0) is divided as it passes through the motive nozzle (1).

7. The process according to claim 6, wherein the motive nozzle (1) is a screen nozzle or a slot nozzle.

8. The process according to claim 1, wherein the suction apparatus comprises at least one ejector jet nozzle which has a motive nozzle (1), a suction chamber (4) which surrounds the motive nozzle and opens out into a mixing nozzle (10), and a momentum exchange chamber (7) into which the outlet of the mixing nozzle (10) points, the suction chamber (4) being connected to the gas phase and the motive jet (0) being conducted through its motive nozzle (1) via the mixing nozzle (10) into the momentum exchange chamber (7).

9. The process according to claim 8, wherein a swirling motion is imparted to the motive jet (0) before it passes through the motive nozzle (1).

10. The process according to claim 9, wherein the swirling motion is imparted with a swirl body (9) installed upstream of the motive nozzle (1).

11. The process according to claim 9, wherein the swirling motion is imparted by supplying the motive liquid (0) to the motive nozzle (1) tangentially.

12. The process according to any of claims 8 to 11, wherein the motive jet (0) is divided as it passes through the motive nozzle (1).

13. The process according to claim 12, wherein the motive nozzle (1) is a screen nozzle or a slot nozzle.

14. The process according to any of claims 1 to 7, wherein the ejector is installed horizontally into the vessel.

15. The process according to any of claims 8 to 13, wherein the ejector jet nozzle is installed horizontally into the vessel.

16. The process according to any of claims 8 to 13 and 15, wherein the transition from the mixing nozzle (10) into the momentum exchange chamber (7) is provided with a sheath heaving at least one orifice, with the proviso that the at least one orifice is below the central jet (11) leading from the mixing nozzle (10) into the momentum exchange chamber (7).

17. The process according to any of claims 8 to 13 and 15, wherein the transition from the mixing nozzle (10) into the momentum exchange chamber (7) is provided with a sheath which has at least one orifice which opens out to an immersed tube leading in the direction of the vessel bottom.

18. The process according to any of claims 1 to 17, wherein the volume of the gas phase in the vessel is at least 5% by volume of the liquid or mixture volume stored in the vessel.

19. The process according to any of claims 1 to 18, wherein the liquid or mixture fed into the vessel as a motive jet (0) comprises a portion or the entirety of a portion of the liquid or mixture present in the vessel which has been withdrawn beforehand from the vessel.

20. The process according to any of claims 1 to 19, wherein the liquid or mixture fed into the vessel as a motive jet (0) does not comprise a portion of the liquid or mixture present in the vessel which has been withdrawn beforehand from the vessel.

21. The process according to any of claims 1 to 20, wherein the liquid or mixture fed into the vessel as a motive jet (0) has been conducted through a heat exchanger beforehand.

## Revendications

1. Procédé de mélange d'un liquide ou d'un mélange d'un liquide et d'un solide finement divisé se trouvant dans un contenant essentiellement fermé, à condition que le liquide ou mélange ne remplisse que partiellement le volume intérieur du contenant occupable par une phase fluide et que le volume intérieur occupable résiduel restant du contenant soit rempli par une phase gazeuse, comprenant une introduction d'essentiellement le même liquide ou d'essentiellement le même mélange dans le contenant en tant que jet d'entraînement (0) d'un dispositif d'aspiration se trouvant dans le liquide ou dans le mélange dans le contenant, qui aspire un gaz à partir de la phase gazeuse se trouvant dans le contenant à l'aide du jet d'entraînement (0) et décharge le gaz aspiré avec le et d'entraînement (0) dans le liquide ou mélange se trouvant dans le contenant, **caractérisé en ce que** la phase gazeuse contient de l'oxygène moléculaire et la phase liquide contient au moins un des composés organiques du groupe constitué par le N-vinylformamide, l'acroléine, la méthacroléine, l'acide acrylique, l'acide méthacrylique, les esters de l'acide acrylique et les esters dé l'acide méthacrylique, et au moins un inhibiteur de polymérisation est dissous dans le liquide, et au moins 10⁻⁵ litres normés de gaz sont aspirés de la phase gazeuse par minute et par litre de liquide ou de mélange de liquide et de solide finement divisé se trouvant dans le contenant, et déchargés dans le liquide ou mélange se trouvant dans le contenant, à condition que ≤ 1 % en volume du gaz aspiré à partir de la phase gazeuse déchargé avec le jet d'entraînement dans le liquide ou mélange se trouvant dans le contenant soit modifié chimiquement lors d'un barbotage unique dans le liquide ou mélange entreposé.

2. Procédé selon la revendication 1, **caractérisé en ce que** le dispositif d'aspiration comprend au moins un éjecteur, qui comprend une buse d'entraînement (1) et une chambre d'aspiration (4), qui est connectée avec la phase gazeuse, et dans la buse d'entraînement (1) duquel le jet d'entraînement (0) est conduit.

3. Procédé selon la revendication 2, **caractérisé en ce qu'**un mouvement de torsion est appliqué au jet d'entraînement (0) avant son passage dans la buse d'entraînement (1).

4. Procédé selon la revendication 3, **caractérisé en ce que** le mouvement de torsion est appliqué avec un corps de torsion (9) monté avant la buse d'entraînement (1).

5. Procédé selon la revendication 3, **caractérisé en ce que** le mouvement de torsion est appliqué en introduisant tangentiellement le liquide d'entraînement (0) dans la buse d'entraînement (1).

6. Procédé selon l'une quelconque des revendications 1 à 5, **caractérisé en ce que** le jet d'entraînement (0) est fragmenté lors du passage dans la buse d'entraînement (1).

7. Procédé selon la revendication 6, **caractérisé en ce que** la buse d'entraînement (1) est une buse à tamis ou une buse à fente.

8. Procédé selon la revendication 1, **caractérisé en ce que** le dispositif d'aspiration comprend au moins une buse à jet d'éjection, qui comprend une buse d'entraînement (1), une chambre d'aspiration (4) entourant la buse d'entraînement et débouchant dans une buse de mélange (10), et une chambre d'échange de quantité de mouvement (7) dans laquelle la buse de mélange (10) débouche, la chambre d'aspiration (4) étant connectée avec la phase gazeuse et le jet d'entraînement (0) étant conduit dans la chambre d'échange de quantité de mouvement (7) par le bilais de la buse de mélange (10) par sa buse d'entraînement (1).

9. Procédé selon la revendication 8, **caractérisé en ce qu'**un mouvement de torsion est appliqué au jet d'entraînement (0) avant son passage dans la buse d'entraînement (1).

10. Procédé selon la revendication 9, **caractérisé en ce que** le mouvement de torsion est appliqué avec un corps de torsion (9) monté avant la buse d'entraînement (1).

11. Procédé selon la revendication 9, **caractérisé en ce que** le mouvement de torsion est appliqué en introduisant tangentiellement le liquide d'entraînement (0) dans la buse d'entraînement (1).

12. Procédé selon l'une quelconque des revendications 8 à 11, **caractérisé en ce que** le jet d'entraînement (0) est fragmenté lors du passage dans la buse d'entraînement (1).

13. Procédé selon la revendication 12, **caractérisé en ce que** la buse d'entraînement (1) est une buse à tamis ou une buse à fente.

14. Procédé selon l'une quelconque des revendications 1 à 7, **caractérisé en ce que** l'éjecteur est monté horizontalement dans le contenant.

15. Procédé selon l'une quelconque des revendications 8 à 13, **caractérisé en ce que** la buse à jet d'injection est montée horizontalement dans le contenant.

16. Procédé selon l'une quelconque des revendications 8 à 13 et 15, **caractérisé en ce que** le passage de la buse de mélange (10) dans la chambre d'échange de quantité de mouvement (7) est muni d'une enveloppe comprenant au moins une ouverture, à condition que la ou les ouvertures se trouvent en dessous du jet central (11) conduisant de la buse de mélange (10) dans la chambre d'échange de quantité de mouvement (7).

17. Procédé selon l'une quelconque des revendications 8 à 13 et 15, **caractérisé en ce que** le passage de la buse de mélange (10) dans la chambre d'échange de quantité de mouvement (7) est muni d'une enveloppe comprenant au moins une ouverture qui débouche dans un tube plongeur conduisant dans la direction du fond du contenant.

18. Procédé selon l'une quelconque des revendications 1 à 17, **caractérisé en ce que** le volume de la phase gazeuse dans le contenant est d'au moins 5 % en volume du volume de liquide ou de mélange entreposé dans le contenant.

19. Procédé selon l'une quelconque des revendications 1 à 18, **caractérisé en ce que** le liquide ou mélange introduit dans le contenant en tant que jet d'entraînement (0) comprend une partie ou la totalité d'une partie du liquide ou mélange se trouvant dans le contenant soutirée auparavant du contenant.

20. Procédé selon l'une quelconque des revendications 1 à 19, **caractérisé en ce que** le liquide ou mélange introduit dans le contenant en tant que jet d'entraînement (0) ne comprend aucune partie du liquide ou mélange se trouvant dans le contenant soutiré auparavant du contenant.

21. Procédé selon l'une quelconque des revendications 1 à 20, **caractérisé en ce que** le liquide ou mélange introduit dans le contenant en tant que jet d'entraînement (0) a auparavant traversé un échangeur de chaleur.
